(19) **Europäisches Patentamt / European Patent Office / Office européen des brevets**

(11) **EP 3 839 101 B1**

(12) **EUROPEAN PATENT SPECIFICATION**

(45) Date of publication and mention of the grant of the patent:
**25.06.2025 Bulletin 2025/26**

(21) Application number: **19850400.3**

(22) Date of filing: **08.08.2019**

(51) International Patent Classification (IPC):
**C25B 1/04** *(2021.01)* **C25B 15/023** *(2021.01)*
**C25B 15/08** *(2006.01)* **C25B 9/05** *(2021.01)*
**C25B 9/19** *(2021.01)* **C25B 15/027** *(2021.01)*

(52) Cooperative Patent Classification (CPC):
**C25B 1/04; C25B 9/19; C25B 15/023;**
**C25B 15/027; C25B 15/083; C25B 15/087;**
Y02E 60/36

(86) International application number:
**PCT/JP2019/031482**

(87) International publication number:
**WO 2020/036128 (20.02.2020 Gazette 2020/08)**

(54) **WATER ELECTROLYSIS APPARATUS**

WASSERELEKTROLYSEVORRICHTUNG

APPAREIL D'ÉLECTROLYSE DE L'EAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2018 JP 2018152409**

(43) Date of publication of application:
**23.06.2021 Bulletin 2021/25**

(73) Proprietor: **Asahi Kasei Kabushiki Kaisha Tokyo 1000006 (JP)**

(72) Inventors:
• **SUZUKI Keita**
**Tokyo 100-0006 (JP)**

• **KIM Sanghoon**
**Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
JP-A- 2003 138 391   JP-A- 2003 138 391
JP-A- 2006 131 957   JP-A- 2010 121 146
JP-A- 2011 006 769   RU-C1- 2 038 422
US-A1- 2017 327 958

**Description**

Technical Field

The present invention relates to a water electrolysis apparatus, see claim 1.

Background Art

Conventionally, water electrolysis apparatuses that electrolyze water, using an electrolytic membrane and generate oxygen and hydrogen on one surface side and the other surface side of the electrolytic membrane, respectively, have been proposed (see, for example, PTLs 1 to 3). Such a water electrolysis apparatus is configured to keep constant differential pressure between the pressure of oxygen on the one surface side of the electrolytic membrane and the pressure of hydrogen on the other surface side thereof in order to prevent breakage of the electrolytic membrane and keep low oxygen concentration in hydrogen and hydrogen concentration in oxygen.

Citation List

Patent Literature

PTL 1: JP 4000415 B
PTL 2: JP H08-193287 A
PTL 3: JP 2011-006769 A
PTL4 : JP 2003-138391 A, describing the preamble of claim 1

Summary of Invention

Technical Problem

Such a water electrolysis apparatus has been required to more appropriately reduce differential pressure on the electrolytic membrane.
The present invention has been made in view of the circumstances described above, and an object of the present invention is to provide a water electrolysis apparatus that more appropriately reduces differential pressure on an electrolytic membrane.

Solution to Problem

In order to achieve the above object, according to a first aspect of the present invention, there is provided a water electrolysis apparatus as defined in claim 1.
Further preferred embodiments of the present invention are defined in the dependent claims.

Advantageous Effects of Invention

According to the present invention, it is possible to provide a water electrolysis apparatus that more appropriately reduces differential pressure on an electrolytic membrane.

Brief Description of Drawings

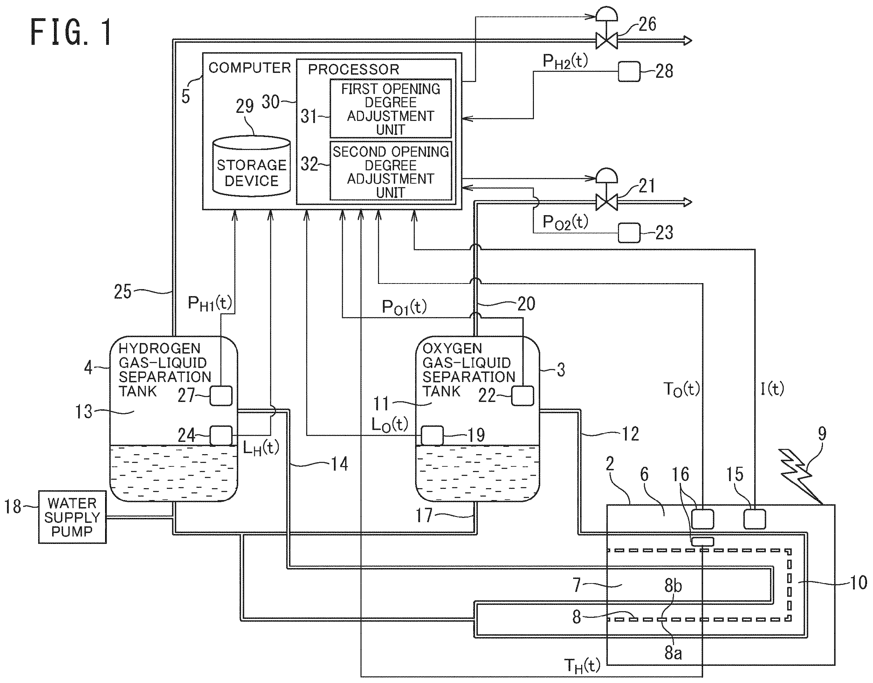

FIG. 1 is a configuration diagram of a water electrolysis apparatus according to an embodiment of the present invention;

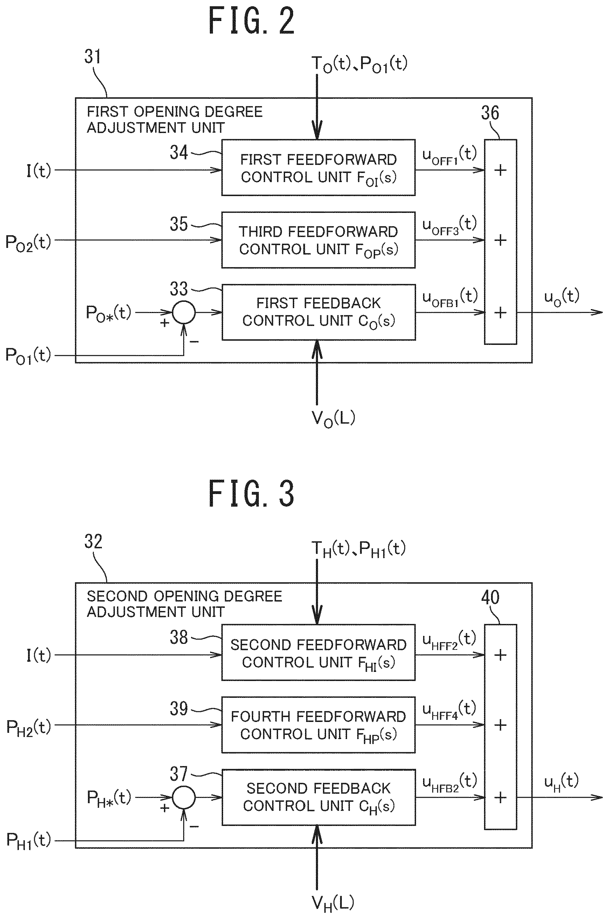

FIG. 2 is a block diagram illustrative of an internal configuration of a first opening degree adjustment unit;
FIG. 3 is a block diagram illustrative of an internal configuration of a second opening degree adjustment unit;

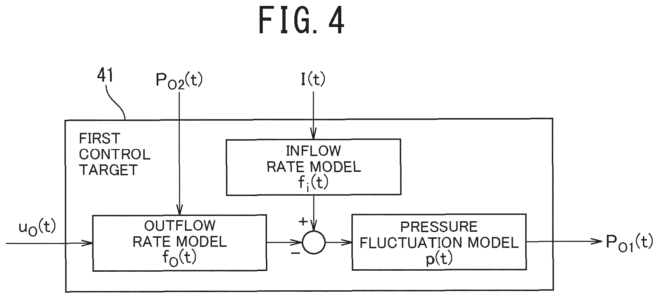

FIG. 4 is a block diagram illustrative of an internal configuration of a first control target;

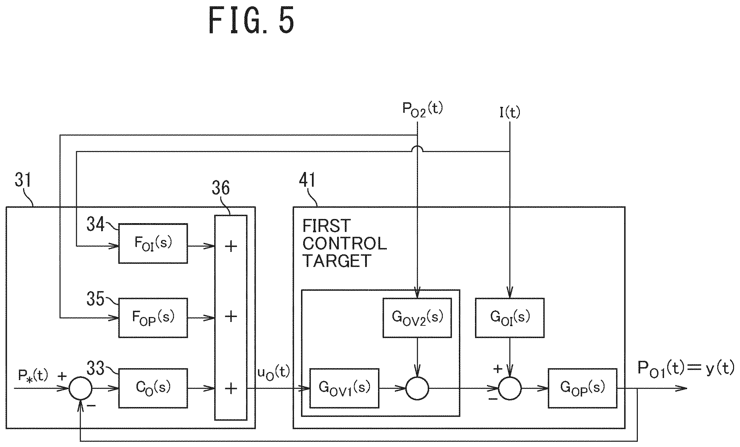

FIG. 5 is a block diagram illustrative of a configuration in which controllers of first feedback control, first feedforward control, and third feedforward control are applied to the first control target;

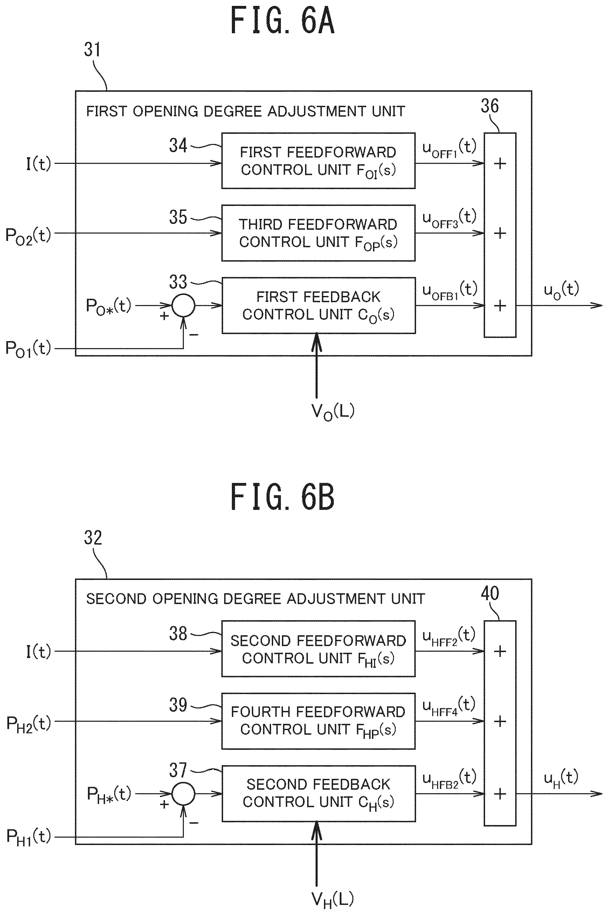

FIGS. 6A and 6B are diagrams illustrative of a first opening degree adjustment unit and a second opening degree adjustment unit according to a variation, and FIGS. 6A and 6B are block diagrams illustrative of internal configurations of the first opening degree adjustment unit and the second opening degree adjustment unit, respectively;

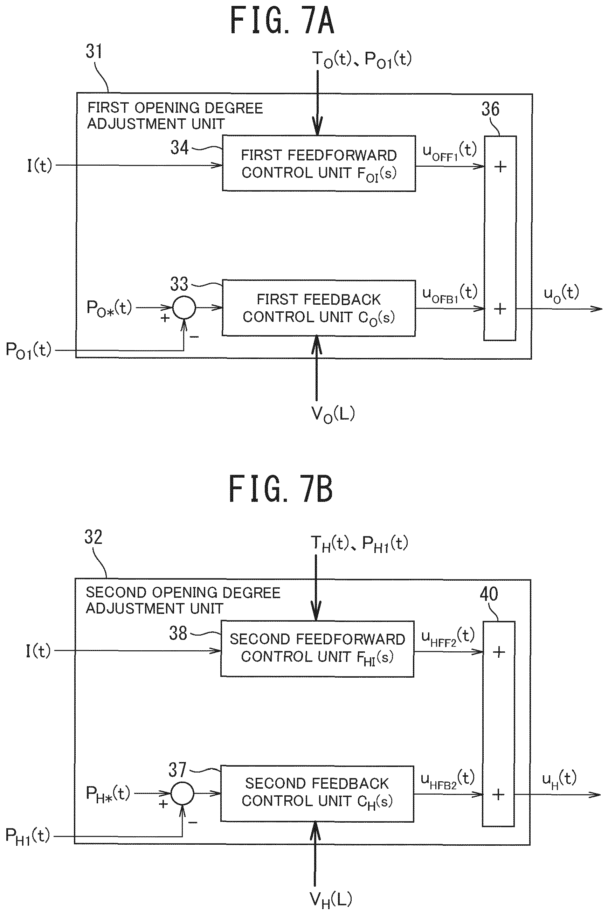

FIGS. 7A and 7B are diagrams illustrative of a first opening degree adjustment unit and a second opening degree adjustment unit according to another variation, and FIGS. 7A and 7B are block diagrams illustrative of internal configurations of the first opening degree adjustment unit and the second opening degree adjustment unit, respectively;

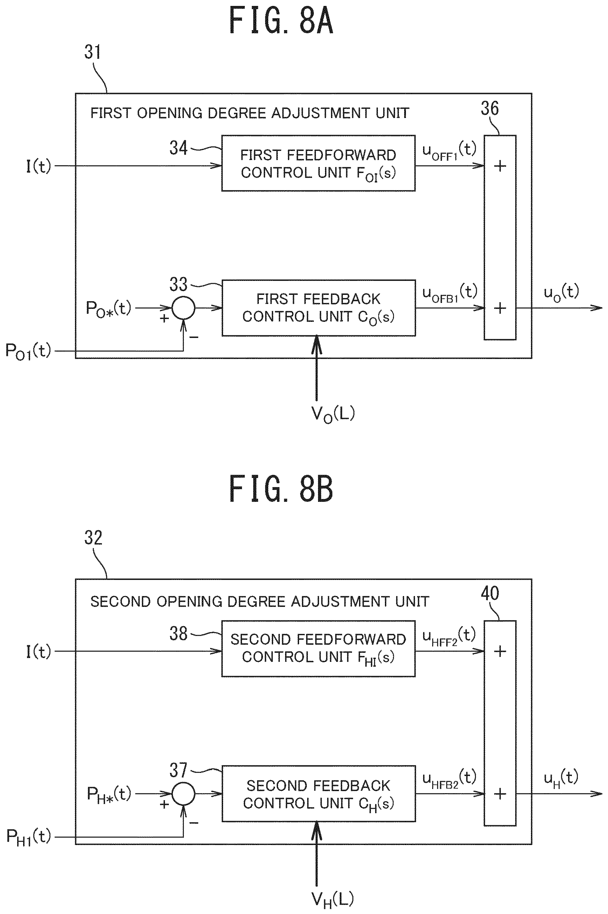

FIGS. 8A and 8B are diagrams illustrative of a first opening degree adjustment unit and a second opening degree adjustment unit according to still another variation, and FIGS. 8A and 8B are block diagrams illustrative of internal configurations of the first opening degree adjustment unit and the second opening degree adjustment unit, respectively;

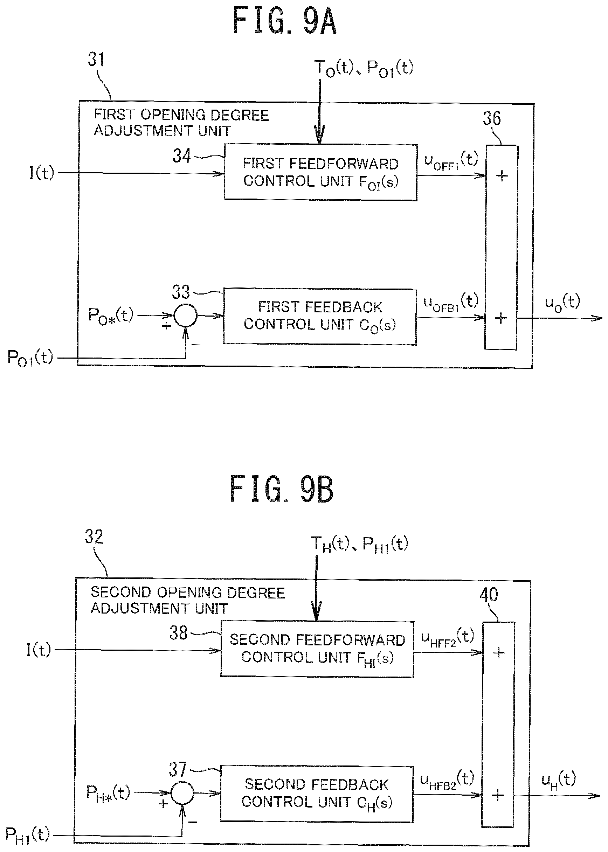

FIGS. 9A and 9B are diagrams illustrative of a first opening degree adjustment unit and a second opening degree adjustment unit according to still another variation, and FIGS. 9A and 9B are block diagrams illustrative of internal configurations of the first opening degree adjustment unit and the second opening degree adjustment unit, respectively;

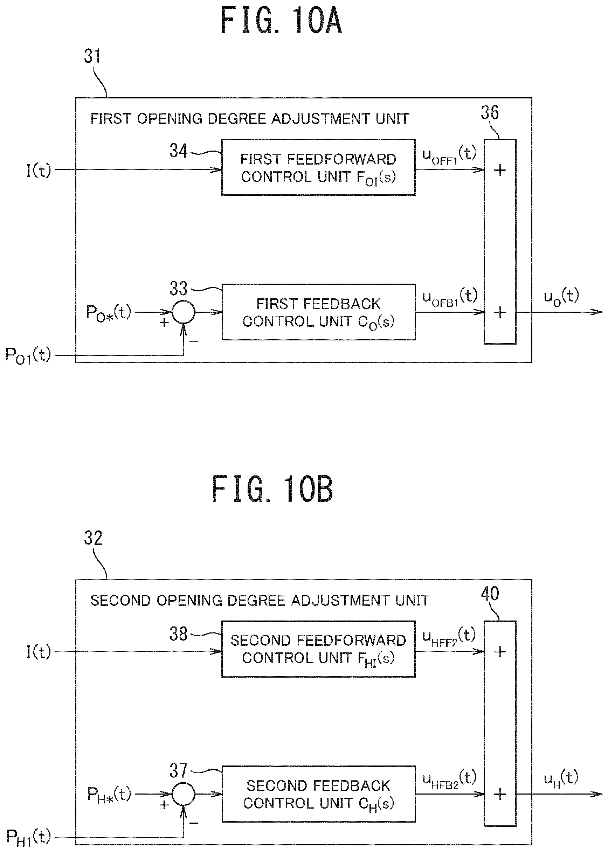

FIGS. 10A and 10B are diagrams illustrative of a first opening degree adjustment unit and a second opening degree adjustment unit according to still another variation, and FIGS. 10A and 10B are block diagrams illustrative of internal configurations of the first opening degree adjustment unit and the second opening degree adjustment unit, respectively;

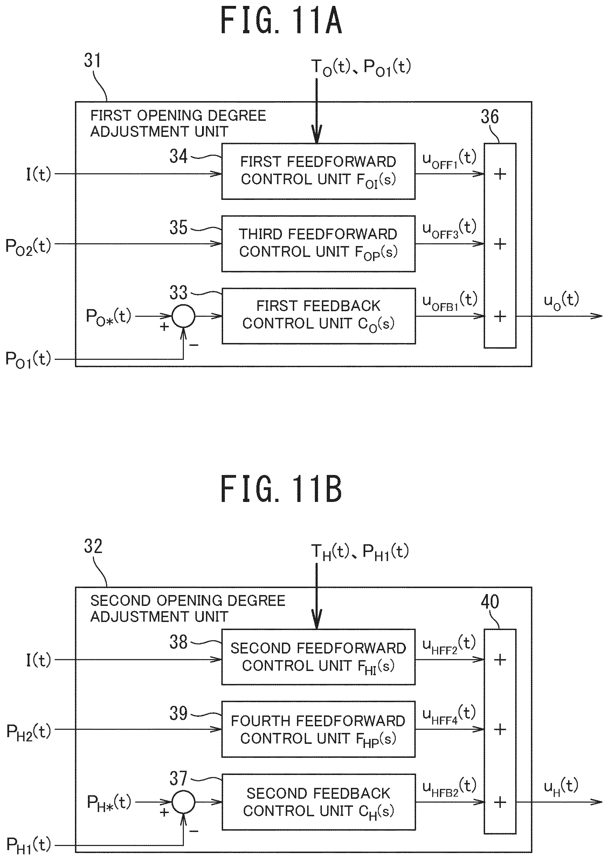

FIGS. 11A and 11B are diagrams illustrative of a first opening degree adjustment unit and a second opening degree adjustment unit according to still another variation, and FIGS. 11A and 11B are block diagrams illustrative of internal configurations of the first opening degree adjustment unit and the second opening degree adjustment unit, respectively; and

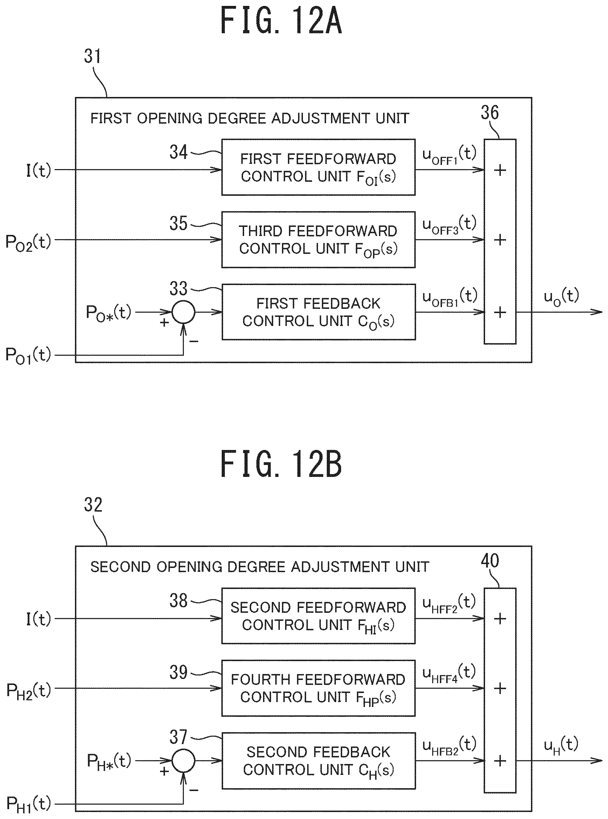

FIGS. 12A and 12B are diagrams illustrative of a first opening degree adjustment unit and a second opening degree adjustment unit according to still another variation, and FIGS. 12A and 12B are block diagrams illustrative of internal configurations of the first opening degree adjustment unit and the second opening degree adjustment unit, respectively.

Description of Embodiments

A water electrolysis apparatus according to an embodiment of the present invention will now be described with reference to the drawings.

The water electrolysis apparatus of the present embodiment is an apparatus that electrolyze water, using an electrolytic membrane, based on power that is generated using natural energy, such as wind force, sunlight, and terrestrial heat, which fluctuates irregularly.

Note that the embodiment described below indicates a method and an apparatus to embody the technical idea of the present invention by way of example. Therefore, the embodiment does not limit the structures, arrangements, and the like of the constituent components in the technical idea of the present invention to those described below. In other words, the technical idea of the present invention can be subjected to various modifications within the technical scope defined by the claims set forth in CLAIMS.

(Configuration)

As illustrated in FIG. 1, a water electrolysis apparatus 1 according to an embodiment of the present invention includes an electrolytic bath 2, an oxygen gas-liquid separation tank 3, a hydrogen gas-liquid separation tank 4, and a computer 5.

The electrolytic bath 2 includes an anode chamber 6 in which an anode is installed, a cathode chamber 7 in which a cathode is installed, and an electrolytic membrane 8 that partitions the anode chamber 6 from the cathode chamber 7. The electrolytic bath 2 electrolyzes water 10, using the electrolytic membrane 8, based on power 9 supplied from a power generation apparatus (for example, a wind power generation apparatus, a solar power generation apparatus, or a geothermal power generation apparatus) that generates power using irregular natural energy, and generates oxygen 11 in the anode chamber 6 (that is, a partition on the one surface 8a side of the electrolytic membrane 8, which is hereinafter also referred to as "oxygen generation portion"), using the anode. The generated oxygen 11 and water 10 are fed to the oxygen gas-liquid separation tank 3 via a conduit 12. On the other hand, the electrolytic bath 2 generates hydrogen 13 in the cathode chamber 7 (that is, a partition on the other surface 8b side of the electrolytic membrane 8, which is hereinafter also referred to as "hydrogen generation portion"), using the cathode. The generated hydrogen 13 and water 10 are fed to the hydrogen gas-liquid separation tank 4 via a conduit 14.

(Electrolytic Membrane)

As the electrolytic membrane 8, an ion-permeable electrolytic membrane 8 can be used in order to, while conducting ions, isolate hydrogen gas and oxygen gas from each other. As the ion-permeable electrolytic membrane 8, it is preferable to use an electrolytic membrane that has, for example, low gas permeability, high ionic conductivity, low electronic conductivity, and high strength. For example, an ion exchange membrane that has ion exchange capacity or a porous membrane that allows an electrolytic solution to permeate therethrough can be used.

(Porous Membrane)

The porous membrane is a membranous member that has a plurality of fine through-holes and has a structure that allows an electrolytic solution to permeate the electrolytic membrane 8. Since an electrolytic solution infiltrating into the porous membrane causes ionic conduction to appear, adjustment of a porous structure, such as pore diameter, porosity, and hydrophilicity, becomes substantially important. The porous membrane is required not only to allow an electrolytic solution to permeate therethrough but also not to allow generated gas to pass therethrough, that is, to have gas barrier properties. As such, from the perspective of gas barrier properties, adjustment of the porous structure also becomes important.

As the porous membrane, a membranous member, such as a polymer porous membrane, an inorganic porous membrane, a woven fabric, and a nonwoven fabric, can be used. These membranous members can be manufactured by a known technology. Examples of the manufacturing method of a polymer porous membrane include a phase conversion method (micro-phase separation method), an extraction method, a stretching method, and a wet gel spinning method.

As a material of the porous membrane, it is preferable to use, for example, a material that includes a polymer material and hydrophilic inorganic particles. Including hydrophilic inorganic particles enables the porous membrane to be provided with hydrophilicity.

(Polymer Material)

Examples of the polymer material include polysulfone, polyether sulfone, polyphenylsulfone, polyvinylidene fluoride, polycarbonate, a tetrafluoroethylene-perfluoroalkyl vinyl ether copolymer, a tetrafluoroethylene-ethylene copolymer, polyvinylidene fluoride, polytetrafluoroethylene, perfluorosulfonic acid, perfluorocarboxylic acid, polyethylene, polypropylene, polyphenylene sulfide, polypara-phenylenebenzobisoxazole, polyketone, polyimide, and polyetherimide. Among the above-described materials, polysulfone, polyether sulfone, polyphenylsulfone, polyphenylene sulfide, or polytetrafluoroethylene is preferably used and polysulfone is more preferably used. One type of the materials may be used alone, or two or more types of materials may be used in combination. In other words, a composite polymer material in which two or more types of materials are mixed may be used.

It is preferable to adjust the pore diameter of the porous membrane in order to achieve appropriate membrane physical properties, such as separation capacity and strength. When the porous membrane is used in alkaline water electrolysis, it is also preferable to adjust the pore diameter from perspectives of preventing mixing of oxygen gas generated from an anode 2a and hydrogen gas generated from a cathode 2c and reducing voltage loss in the electrolysis. For example, there is a tendency that, the larger the average pore diameter of the porous membrane is, the larger the permeation amount of the porous membrane per unit area becomes and, particularly in the electrolysis, the more excellent the ion permeability of the porous membrane becomes, which facilitates reduction in the voltage loss. In addition, there is a tendency that, the larger the average pore diameter of the porous membrane is, the smaller the contact surface area with alkaline water becomes, which causes deterioration of polymer to be suppressed.

On the other hand, there is a tendency that, the smaller the average pore diameter of the porous membrane is, the higher the separation precision of the porous membrane becomes and the more excellent the gas barrier properties of the porous membrane becomes. Further, when hydrophilic inorganic particles having a small particle size, which will be described later, are supported on the porous membrane, it is possible to hold the hydrophilic inorganic particles without missing particles. This capability enables high retention capacity that the hydrophilic inorganic particles have to be provided and the effect thereof to be maintained for a long period of time.

From such a perspective, the average pore diameter of the porous membrane is preferably in a range of 0.1 $\mu$m or more and 1.0 $\mu$m or less. When the pore diameter is in this range, the porous membrane is capable of achieving both excellent gas barrier properties and high ion permeability at the same time. The pore diameter of the porous membrane is preferably adjusted in an actual use temperature range. For example, when the porous membrane is used in alkaline water electrolysis under an environment of 90°C, the above-described requirement for the pore diameter range is preferably satisfied at 90°C. When the porous membrane is used in alkaline water electrolysis, the average pore diameter of the porous membrane is more preferably in a range of 0.1 $\mu$m or more and 0.5 $\mu$m or less as a range enabling more excellent gas barrier properties and higher ion permeability to appear.

As the average pore diameter of the porous membrane of the present embodiment, an average permeable pore diameter measured by the following method using an integrity tester ("Sartocheck Junior BP-Plus" manufactured by Sartorius Stedim Japan K.K.) is used. In the measurement of an average permeable pore diameter, first, a sample of a predetermined size including a core material is cut from the porous membrane. Next, the sample is set in any pressure-resistant container and the pressure-resistant container is filled with pure water. Next, the pressure-resistant container is held in a thermostatic chamber set at a predetermined temperature and measurement is started after the inside of the pressure-resistant container has reached the predetermined temperature. When the measurement begins, since the upper surface side of the sample becomes pressurized with nitrogen and pure water permeates through the sample from the under surface side to the upper surface side of the sample, numerical values of pressure on the upper surface side of the sample and a permeation flow rate of pure water permeating the sample when the pure water permeates through the sample are recorded. The average permeable pore diameter can be calculated from the following Hagen-Poiseuille equation, using a gradient between the pressure and the water permeation flow rate for a pressure range between 10 kPa and 30 kPa.

Average permeable pore diameter $(m) = \{32\eta L\mu_0/(\varepsilon P)\}^{0.5}$

$$\mu_0 \ (m/s) = \text{flow rate } (m^3/s) / \text{flow passage area } (m^2)$$

In the above equation, $\eta$ is viscosity (Pa·s) of water, L is thickness (m) of the porous membrane, $\mu_0$ is apparent flow velocity, $\varepsilon$ is porosity, and P is pressure (Pa).

When the porous membrane is used in alkaline water electrolysis, it is preferable to adjust the porosity of the porous membrane from the perspectives of maintaining gas barrier properties and hydrophilicity, preventing deterioration in ion permeability due to attachment of bubbles, and being able to acquire stable electrolysis performance (low voltage loss and the like) for a long period of time. In particular, from the perspective of achieving both the gas barrier properties and low voltage loss at the same time at a high level, a lower limit of the porosity of the porous membrane is preferably 30% or more, more preferably 35% or more, and still more preferably 40% or more. In addition, an upper limit of the porosity is preferably 70% or less, more preferably 65% or less, and still more preferably 55% or less. When the porosity of the porous membrane is the above-described upper limit or less, ions are likely to permeate the membrane and it is possible to suppress voltage loss across the membrane.

As the porosity of the porous membrane of the present embodiment, open porosity that is calculated by the Archimedes' method is used. The open porosity can be calculated by the following equation.

Open porosity

$$P \ (\%) = \rho/(1+\rho) \times 100$$

$$\rho = (W3-W1)/(W3-W2)$$

In the above equation, W1, W2, and W3 are dry mass (g), underwater mass (g), and water saturated mass (g) of the porous membrane, respectively.

In the measurement of the porosity, first, three samples each of which has a size of 3 cm by 3 cm are cut from a porous membrane that is washed by pure water, and values of W2 and W3 of the three samples are measured. Next, after leaving the three samples in a dryer the temperature of which is set at 50°C for 12 hours or more and thereby drying the three samples, values of W1 of the three samples are measured. The open porosity can be calculated by the above-described equation, using the measured values of W1, W2, and W3. An arithmetic mean value of the respective open porosities of the three samples is used as the porosity.

The thickness of the porous membrane, although not specifically limited, is preferably 100 $\mu$m or more and 700 $\mu$m or less, more preferably 100 $\mu$m or more and 600 $\mu$m or less, and still more preferably 200 $\mu$m or more and 600 $\mu$m or less. When the thickness of the porous membrane is 100 $\mu$m or more, the porous membrane is hard to be torn by piercing or the like, the electrodes are hard to be short-circuited, and gas barrier properties become excellent. When the thickness of the porous membrane is 600 $\mu$m or less, voltage loss is hard to increase and influence of variation in the thickness decreases.

When the thickness of the porous membrane is 250 $\mu$m or more, it is possible to acquire more excellent gas barrier properties and further improve the strength of the porous membrane against impact. From this perspective, the lower limit of the thickness of the porous membrane is more preferably 300 $\mu$m or more, still more preferably 350 $\mu$m or more, and further still more preferably 400 $\mu$m or more. On the other hand, when the thickness of the porous membrane is 700 $\mu$m or less, the ion permeability is hard to be inhibited by resistance of the electrolytic solution contained in the pores at the time of operation and it is possible to maintain more excellent ion permeability. From this perspective, the upper limit of the thickness of the porous membrane is more preferably 600 $\mu$m or less, still more preferably 550 $\mu$m or less, and further still more preferably 500 $\mu$m or less.

(Hydrophilic Inorganic Particles)

The porous membrane preferably contains hydrophilic inorganic particles in order to make high ion permeability and high gas barrier properties appear. As a method for making the porous membrane contain hydrophilic inorganic particles, for example, a method of attaching hydrophilic inorganic particles on the surfaces of the porous membrane, a method of embedding some of hydrophilic inorganic particles inside the porous membrane, or a method of making the porous membrane contain hydrophilic inorganic particles in a cavity portion thereof can be used. The method of making the porous membrane contain hydrophilic inorganic particles in the cavity portion thereof enables the hydrophilic inorganic particles to become hard to desorb from the cavity of the porous membrane and high ion permeability and high gas barrier properties of the porous membrane to be maintained for a long period of time.

Examples of the hydrophilic inorganic particles include at least one type of inorganic substance chosen from a group made up of an oxide or a hydroxide of zirconium, bismuth, or cerium, an oxide of a group IV element of the periodic table, a nitride of a group IV element of the periodic table, and a carbide of a group IV element of the periodic table. From the perspective of chemical stability, among the above-described substances, an oxide of zirconium, bismuth, or cerium or an oxide of a group IV element of the periodic table is preferably used, an oxide of zirconium, bismuth, or cerium is more preferably used, and zirconium oxide is still more preferably used. The forms of the hydrophilic inorganic particles is preferably, for example, fine particle shapes.

In the electrolytic bath 2, a current detector 15 configured to detect current $I(t)$ that is supplied to the electrolytic bath 2 for the electrolysis of the water 10 and temperature detectors 16 configured to detect temperatures $T_O(t)$ and $T_H(t)$ of the water 10 in the electrolytic bath 2 are disposed. As used herein, the temperature $T_O(t)$ is temperature of the water 10 in the vicinity of the anode in the anode chamber 6. In other words, the temperature $T_O(t)$ is temperature of the water 10 in the oxygen generation portion. In addition, the temperature $T_H(t)$ is temperature of the water 10 in the vicinity of the cathode in the cathode chamber 7. In other words, the temperature $T_H(t)$ is temperature of the water 10 in the hydrogen generation portion. Detection results of the current $I(t)$ and the temperatures $T_O(t)$ and $T_H(t)$ are input to the computer 5.

The oxygen gas-liquid separation tank 3 stores the oxygen 11 and the water 10 fed from the electrolytic bath 2. In the oxygen gas-liquid separation tank 3, the water 10 and the oxygen 11 are positioned on the lower side and the upper side, respectively, and the stored oxygen 11 and water 10 are separated. With the bottom end side of the oxygen gas-liquid separation tank 3, a conduit 17 for water that communicates with the feed water inlet side of the electrolytic bath 2 is communicated. The water 10 in the oxygen gas-liquid separation tank 3 is supplied to the anode chamber 6 and the cathode chamber 7 in the electrolytic bath 2 via the conduit 17 for water. The water 10 that has decreased due to electrolysis and the like is replenished from the outside via a water supply pump 18.

In the oxygen gas-liquid separation tank 3, a first water level detector 19 configured to detect a water level $L_O(t)$ in the oxygen gas-liquid separation tank 3 is installed. A detection result of the water level $L_O(t)$ is input to the computer 5.

With the top end side of the oxygen gas-liquid separation tank 3, a conduit 20 for oxygen for taking out the oxygen 11 to the outside is communicated. In the conduit 20 for oxygen, an oxygen pressure control valve 21 that is capable of adjusting a flow rate in the conduit 20 for oxygen is disposed. The oxygen pressure control valve 21 controls an opening degree $u_O(t)$ of the oxygen pressure control valve 21 in accordance with a signal from the computer 5.

Further, in the oxygen gas-liquid separation tank 3, a first tank internal pressure detector 22 configured to detect tank internal pressure $P_{O1}(t)$ from the oxygen 11 in the oxygen gas-liquid separation tank 3 is arranged. A detection result (tank internal pressure $P_{O1}(t)$) by the first tank internal pressure detector 22 is input to the computer 5.

In addition, on the outlet side of the oxygen pressure control valve 21 in the conduit 20 for oxygen, a first outlet pressure detector 23 configured to detect outlet pressure $P_{O2}(t)$ of the oxygen pressure control valve 21 is arranged. A detection result (outlet pressure $P_{O2}(t)$) by the first outlet pressure detector 23 is input to the computer 5.

The hydrogen gas-liquid separation tank 4 stores the hydrogen 13 and the water 10 fed from the electrolytic bath 2. In the hydrogen gas-liquid separation tank 4, the water 10 and the hydrogen 13 are positioned on the lower side and the upper side, respectively, and the stored hydrogen 13 and water 10 are separated. With the bottom end side of the hydrogen gas-liquid separation tank 4, the conduit 17 for water is communicated, as with the oxygen gas-liquid separation tank 3. The water 10 stored in the hydrogen gas-liquid separation tank 4 is also supplied to the anode chamber 6 and the cathode chamber 7 via the conduit 17 for water.

In the hydrogen gas-liquid separation tank 4, a second water level detector 24 configured to detect a water level $L_H(t)$ in the hydrogen gas-liquid separation tank 4 is installed. A detection result of the water level $L_H(t)$ is input to the computer 5.

Note that, since the inside of the oxygen gas-liquid separation tank 3 and the inside of the hydrogen gas-liquid separation tank 4 are communicated with each other by the conduit 17 for water, water surface levels in both gas-liquid separation tanks are kept at substantially the same level.

With the top end side of the hydrogen gas-liquid separation tank 4, a conduit 25 for hydrogen for taking out the hydrogen 13 to the outside is communicated. In the conduit 25 for hydrogen, a hydrogen pressure control valve 26 that is capable of adjusting a flow rate in the conduit 25 for hydrogen is disposed. The hydrogen pressure control valve 26 controls an opening degree $u_H(t)$ of the hydrogen pressure control valve 26 in accordance with a signal from the computer 5.

Further, in the hydrogen gas-liquid separation tank 4, a second tank internal pressure detector 27 configured to detect tank internal pressure $P_{H1}(t)$ from the hydrogen 13 in the hydrogen gas-liquid separation tank 4 is arranged. A detection result (tank internal pressure $P_{H1}(t)$) of the second tank internal pressure detector 27 is input to the computer 5.

In addition, on the outlet side of the hydrogen pressure control valve 26 in the conduit 25 for hydrogen, a second outlet pressure detector 28 configured to detect outlet pressure $P_{H2}(t)$ of the hydrogen pressure control valve 26 is arranged. A detection result (outlet pressure $P_{H2}(t)$) by the second outlet pressure detector 28 is input to the computer 5.

The computer 5 includes hardware resources, such as a storage device 29 and a processor 30.

The storage device 29 stores control programs for the computer 5 that can be executed by the processor 30. The storage device 29 also stores various types of data that are necessary for the execution of the control programs.

The processor 30 reads control programs from the storage device 29 and achieves a first opening degree adjustment unit 31 configured to control the opening degree $u_O(t)$ of the oxygen pressure control valve 21, a second opening degree adjustment unit 32 configured to control the opening degree $u_H(t)$ of the hydrogen pressure control valve 26, and the like. The first opening degree adjustment unit 31 includes a first feedback control unit 33, a first feedforward control unit 34, a third feedforward control unit 35, and a first summing unit 36, as illustrated in FIG. 2. The second opening degree adjustment unit 32 includes a second feedback control unit 37, a second feedforward control unit 38, a fourth feedforward control unit 39, and a second summing unit 40, as illustrated in FIG. 3.

The first feedback control unit 33 performs first feedback control for controlling the opening degree $u_O(t)$ (hereinafter, also referred to as "$u_{OFB1}(t)$") of the oxygen pressure control valve 21, based on the tank internal pressure $P_{O1}(t)$ in the oxygen gas-liquid separation tank 3, which is detected by the first tank internal pressure detector 22, in such a way that a difference between the tank internal pressure $P_{O1}(t)$ and a predetermined target pressure $P_{O*}(t)$ decreases. Specifically, as expressed by the following equation (1), a numerical value of the opening degree $u_{OFB1}(t)$ of the oxygen pressure control valve 21 is calculated by inputting the detected tank internal pressure $P_{O1}(t)$ to a transfer function $C_O(s)$ of a controller of the first feedback control unit 33 that takes the tank internal pressure $P_{O1}(t)$ in the oxygen gas-liquid separation tank 3 as input and gives the opening degree $u_{OFB1}(t)$ of the oxygen pressure control valve 21 as output.

$$C_O(s) = V_O(L)\{K_{Op} + K_{OI}/s + K_{OD} \cdot s\} \quad \ldots \quad (1)$$

In the equation, $V_O(L)$ is tank gas phase volume of the oxygen gas-liquid separation tank 3 that is calculated based on the water level $L_O(t)$ in the oxygen gas-liquid separation tank 3, which is detected by the first water level detector 19. In addition, $K_{Op}$ is a proportional gain, $K_{OI}$ is an integral gain, $K_{OD}$ is a differential gain, and s is a Laplace operator.

By using the transfer function $C_O(s)$ as described above, in the first feedback control, PID control is performed and, in conjunction therewith, the higher the water level $L_O(t)$, which is detected by the first water level detector 19, is, the smaller PID gains $V_O(L) \cdot K_{Op}$, $V_O(L) \cdot K_{OI}$, and $V_O(L) \cdot K_{OD}$ of the PID control are set.

A calculated numerical value of the opening degree $u_{OFB1}(t)$ of the oxygen pressure control valve 21 is output to the first summing unit 36.

The first feedforward control unit 34 performs first feedforward control for controlling the opening degree $u_O(t)$ (hereinafter, also referred to as "$u_{OFF1}(t)$") of the oxygen pressure control valve 21, based on the current $I(t)$, which is detected by the current detector 15. Specifically, as expressed by the following equation (2), a numerical value of the opening degree $u_{OFF1}(t)$ of the oxygen pressure control valve 21 is calculated by inputting the detected current $I(t)$ to a transfer function $F_{OI}(s)$ of a controller of the first feedforward control unit 34 that takes the current $I(t)$ supplied to the electrolytic bath 2 as input and gives the opening degree $u_{OFF1}(t)$ of the oxygen pressure control valve 21 as output.

[Math 1]

$$F_{OI} = \frac{\bar{P}_{O1}^2 - \bar{P}_{O2}^2}{\alpha_O \bar{P}_{O1}} \tau_O \frac{T_O(t)}{P_{O1}(t)} \frac{1}{T_{OV} s + 1} \quad \cdots (2)$$

$$G_{OVI}(s) = \frac{\alpha_O \bar{P}_{O1}}{\bar{P}_{O1}^2 - \bar{P}_{O2}^2}$$

$$G_{OI}(s) = \tau_O \frac{To(t)}{P_{OI}(t)} \frac{1}{T_{OV}s + 1}$$

In the equation, $T_O(t)$ is temperature of the water 10 in the electrolytic bath 2, which is detected by the temperature detector 16. Further, $P_{O1}(t)$ is tank internal pressure in the oxygen gas-liquid separation tank 3, which is detected by the first tank internal pressure detector 22. In addition, other parameters $P_{O1}$ (having "-" thereabove), $P_{O2}$ (having "-" thereabove), $\alpha_O$, $\tau_O$, and $T_Ov$ are fixed values used in the transfer functions $G_{OV1}$ and $G_{OI}$, which will be described later.

By using the transfer function $F_{OI}(s)$ as described above, in the first feedforward control, the opening degree $u_{OFF1}(t)$ of the oxygen pressure control valve 21 is controlled in such a way that the larger the current $I(t)$, which is detected by the current detector 15, is, the larger the opening degree $u_{OFF1}(t)$ of the oxygen pressure control valve 21 becomes. In addition, the higher the temperature $T_O(t)$ of the water 10 in the oxygen generation portion, which is detected by the temperature detector 16, is, the larger the gain of the controller performing the first feedforward control is set. Further, the higher the tank internal pressure $P_{O1}(t)$, which is detected by the first tank internal pressure detector 22, is, the smaller the gain of the controller performing the first feedforward control is set.

A calculated numerical value of the opening degree $u_{OFF1}$ of the oxygen pressure control valve 21 is output to the first summing unit 36.

The third feedforward control unit 35 performs third feedforward control for controlling the opening degree $u_O(t)$ (hereinafter, also referred to as "$u_{OFF3}(t)$") of the oxygen pressure control valve 21, based on the outlet pressure $P_{O2}(t)$, which is detected by the first outlet pressure detector 23. Specifically, as expressed by the following equation (3), a numerical value of the opening degree $u_{OFF3}(t)$ of the oxygen pressure control valve 21 is calculated by inputting the detected outlet pressure $P_{O2}(t)$ to a transfer function $F_{OP}(s)$ of a controller of the third feedforward control unit 35 that takes the outlet pressure $P_{O2}(t)$ of the oxygen pressure control valve 21 as input and gives the opening degree $u_{OFF3}(t)$ of the oxygen pressure control valve 21 as output.

[Math 2]

$$F_{OP} = \frac{\bar{P}_{O2}}{\bar{P}_{O1}} \quad \cdots (3)$$

By using the transfer function $F_{OP}(s)$ as described above, in the third feedforward control, the opening degree $u_{OFF3}(t)$ of the oxygen pressure control valve 21 is controlled in such a way that the higher the outlet pressure $P_{O2}(t)$, which is detected by the first outlet pressure detector 23, is, the larger the opening degree $u_{OFF3}(t)$ of the oxygen pressure control valve 21 becomes.

A calculated numerical value of the opening degree $u_{OFF3}(t)$ of the hydrogen pressure control valve 26 is output to the first summing unit 36.

The first summing unit 36 sums numerical values of the opening degrees $u_{OFB1}(t)$, $u_{OFF1}(t)$, and $u_{OFF3}(t)$ of the hydrogen pressure control valve 26, which are output from the first feedback control unit 33, the first feedforward control unit 34, and the third feedforward control unit 35, respectively. A signal that indicates the sum result $u_O(t)$ is output to the oxygen pressure control valve 21. Based on the signal, the oxygen pressure control valve 21 adjusts the opening degree $u_O(t)$ of the oxygen pressure control valve 21 in accordance with the output signal in such a way that the sum result is achieved.

The second feedback control unit 37 performs second feedback control for controlling the opening degree $u_H(t)$ (hereinafter, also referred to as "$u_{HFB2}(t)$") of the hydrogen pressure control valve 26, based on the tank internal pressure $P_{H1}(t)$ in the hydrogen gas-liquid separation tank 4, which is detected by the second tank internal pressure detector 27, in such a way that a difference between the tank internal pressure $P_{H1}(t)$ and a predetermined target pressure $P_{H*}(t)$ decreases. It is assumed that the target pressure $P_{H*}(t)$ is the same as the target pressure $P_{O*}(t)$ or approximately slightly greater than the target pressure $P_{O*}(t)$ ($P_{H*}(t) \geq P_{O*}(t)$ and $P_{H*}(t)-P_{O*}(t) \cong 0$) Specifically, as expressed by the following equation (4), a numerical value of the opening degree $u_{HFB2}(t)$ of the hydrogen pressure control valve 26 is calculated by inputting the detected tank internal pressure $P_{H1}(t)$ to a transfer function $C_H(s)$ of a controller of the second feedback control unit 37 that takes the tank internal pressure $P_{H1}(t)$ in the hydrogen gas-liquid separation tank 4 as input and gives the opening degree $u_{HFB2}(t)$ of the hydrogen pressure control valve 26 as output.

$$C_H(s) = V_H(L)\{K_{Hp} + K_{HI}/s + K_{HD} \cdot s\} \quad \cdots (4)$$

In the equation, $V_H(L)$ is tank gas phase volume of the hydrogen gas-liquid separation tank 4 that is calculated based on the water level $L_H(t)$ in the hydrogen gas-liquid separation tank 4, which is detected by the second water level detector 24. In addition, $K_{Hp}$ is a proportional gain, $K_{HI}$ is an integral gain, and $K_{HD}$ is a differential gain.

By using the transfer function $C_H(s)$ as described above, in the second feedback control, PID control is performed and, in conjunction therewith, the higher the water level $L_H(t)$, which is detected by the second water level detector 24, is, the smaller PID gains $V_H(L) \cdot K_{up}$, $V_H(L) \cdot K_{HI}$, and $V_H(L) \cdot K_{HD}$ are set.

A calculated numerical value of the opening degree $u_{HFB2}(t)$ of the hydrogen pressure control valve 26 is output to the second summing unit 40.

The second feedforward control unit 38 performs second feedforward control for controlling the opening degree $u_H(t)$ (hereinafter, also referred to as "$u_{HFF2}(t)$") of the hydrogen pressure control valve 26, based on the current $I(t)$, which is detected by the current detector 15. Specifically, as expressed by the following equation (5), a numerical value of the opening degree $u_{HFF2}(t)$ of the hydrogen pressure control valve 26 is calculated by inputting the detected current $I(t)$ to a transfer function $F_{HI}(s)$ of a controller of the second feedforward control unit 38 that takes the current $I(t)$ supplied to the electrolytic bath 2 as input and gives the opening degree $u_{HFF2}(t)$ of the hydrogen pressure control valve 26 as output.

[Math 3]

$$F_{HI} = \frac{\bar{P}_{H1}^2 - \bar{P}_{H2}^2}{\alpha_H \bar{P}_{H1}} \tau_H \frac{T_H(t)}{P_{H1}(t)} \frac{1}{T_{HV}s+1} \quad \cdots (5)$$

$$G_{HV1}(s) = \frac{\alpha_H \bar{P}_{H1}}{\bar{P}_{H1}^2 - \bar{P}_{H2}^2}$$

$$G_{HI}(s) = \tau_H \frac{T_H(t)}{P_{H1}(t)} \frac{1}{T_{HV}s+1}$$

In the equation, $P_{H1}(t)$ is tank internal pressure in the hydrogen gas-liquid separation tank 4, which is detected by the second tank internal pressure detector 27. In addition, other parameters $P_{H1}$ (having "-" thereabove), $P_{H2}$ (having "-" thereabove), $\alpha_H$, $\tau_H$, and $T_{HV}$ are fixed values used in the transfer functions $G_{HV1}$ and $G_{HI}$, which will be described later.

By using the transfer function $F_{HI}(s)$ as described above, in the second feedforward control, the opening degree $u_{HFF1}(t)$ of the hydrogen pressure control valve 26 is controlled in such a way that the larger the current $I(t)$, which is detected by the current detector 15, is, the larger the opening degree $u_{HFF2}(t)$ of the hydrogen pressure control valve 26 becomes. In addition, the higher the temperature $T_H(t)$ of the water 10 in the hydrogen generation portion, which is detected by the temperature detector 16, is, the larger the gain of the controller performing the second feedforward control is set. Further, the higher the tank internal pressure $P_{H1}(t)$, which is detected by the second tank internal pressure detector 27, is, the smaller the gain of the controller performing the second feedforward control is set.

A calculated numerical value of the opening degree $u_{HFF2}(t)$ of the hydrogen pressure control valve 26 is output to the second summing unit 40.

The fourth feedforward control unit 39 performs fourth feedforward control for controlling the opening degree $u_O(t)$ (hereinafter, also referred to as "$u_{HFF4}(t)$") of the hydrogen pressure control valve 26, based on the outlet pressure $P_{H2}(t)$, which is detected by the second outlet pressure detector 28. Specifically, as expressed by the following equation (6), a numerical value of the opening degree $u_{HFF4}(t)$ of the hydrogen pressure control valve 26 is calculated by inputting the detected outlet pressure $P_{H2}(t)$ to a transfer function $F_{HP}(s)$ of a controller of the fourth feedforward control unit 39 that takes the outlet pressure $P_{H2}(t)$ of the hydrogen pressure control valve 26 as input and gives the opening degree $u_{HFF4}(t)$ of the hydrogen pressure control valve 26 as output.

[Math 4]

$$F_{HP} = \frac{\bar{P}_{H2}}{\bar{P}_{H1}} \quad \cdots (6)$$

By using the transfer function $F_{HP}(s)$ as described above, in the fourth feedforward control, the opening degree $u_{HFF4}(t)$ of the hydrogen pressure control valve 26 is controlled in such a way that the higher the outlet pressure $P_{H2}(t)$, which is detected by the second outlet pressure detector 28, is, the larger the opening degree $u_{HFF4}(t)$ of the hydrogen pressure control valve 26 becomes.

A calculated numerical value of the opening degree $u_{HFF4}(t)$ of the hydrogen pressure control valve 26 is output to the second summing unit 40.

The second summing unit 40 sums numerical values of the opening degrees $u_{HFB2}(t)$, $u_{HFF2}(t)$, and $u_{HFF4}(t)$ of the hydrogen pressure control valve 26, which are output from the second feedback control unit 37, the second feedforward control unit 38, and the fourth feedforward control unit 39, respectively. A signal that indicates the sum result $u_H(t)$ is output to the hydrogen pressure control valve 26. Based on the signal, the hydrogen pressure control valve 26 adjusts the opening degree $u_H(t)$ of the hydrogen pressure control valve 26 in accordance with the output signal in such a way that the sum result is achieved.

(Derivation Method of Transfer Functions of Controllers)

Next, a derivation method of the transfer functions $C_O(s)$, $F_{OI}(s)$, and $F_{OP}(s)$ of the controllers of the first feedback control unit 33, the first feedforward control unit 34, and the third feedforward control unit 35 in the first opening degree adjustment unit 31 will be described with reference to the drawings.

First, as illustrated in FIG. 4, the water electrolysis apparatus 1 when configured to accept the opening degree $u_O$ (t) of the oxygen pressure control valve 21, the outlet pressure $P_{O2}(t)$ of the oxygen pressure control valve 21, and the current I(t) supplied to the electrolytic bath 2 as input and output the tank internal pressure $P_{O1}(t)$ in the oxygen gas-liquid separation tank 3 is modeled as a control target (hereinafter, also referred to as "first control target 41"). The model of the first control target 41 is configured to include an outflow rate model that represents an outflow rate $f_o(t)$ of the oxygen 11 from the oxygen gas-liquid separation tank 3, an inflow rate model that represents an inflow rate $f_i(t)$ of the oxygen 11 into the oxygen gas-liquid separation tank 3, and a pressure fluctuation model that represents pressure fluctuation p(t) of the tank internal pressure $P_{O1}(t)$ in the oxygen gas-liquid separation tank 3.

The outflow rate model is configured as expressed by the following equation (7), based on a unit conversion factor $\alpha$, a CV value $Cv_{max}$ [-], a valve characteristic model $m(u_O)$ [-] of the oxygen pressure control valve 21, the tank internal pressure $P_{O1}(t)$ [kPaG] in the oxygen gas-liquid separation tank 3, and the outlet pressure $P_{O2}(t)$ [kPaG] of the oxygen pressure control valve 21. The valve characteristic model $m(u_O)$ is a function that represents characteristics of the oxygen pressure control valve 21 (for example, whether the opening degree $u_O(t)$ influences the flow rate of the oxygen 11 linearly or nonlinearly).

[Math 5]

$$f_O(t) = \alpha\, Cv_{max}\, m(u_O) \sqrt{P_{O1}^2 - P_{O2}^2} \quad \cdots (7)$$

According to the above-described equation (7), the oxygen 11 does not flow out from the oxygen pressure control valve 21 unless a relationship that the outlet pressure $P_{O2}(t)$ of the oxygen pressure control valve 21 is lower than the tank internal pressure $P_{O1}(t)$ (inlet pressure of the oxygen pressure control valve 21) is maintained. In addition, when a difference between the outlet pressure $P_{O2}(t)$ of the oxygen pressure control valve 21 and the tank internal pressure $P_{O1}(t)$ changes, the magnitude of the outflow rate of the oxygen 11 from the oxygen gas-liquid separation tank 3 changes. For example, as the outlet pressure $P_{O2}(t)$ increases, the outflow rate of the oxygen 11 decreases. On the other hand, as the tank internal pressure $P_{O1}(t)$ increases, the outflow rate of the oxygen 11 increases.

The inflow rate model is configured as expressed by the following equation (8), based on a conversion factor $\tau$, the temperature $T_O(t)$ of the water 10 in the oxygen generation portion, the tank internal pressure $P_{O1}(t)$ in the oxygen gas-liquid separation tank 3, a first-order lag function $1/(T_{Ov}s+1)$ that represents temporal characteristics until when the oxygen 11 generated in the electrolytic bath 2 influences the tank internal pressure $P_{O1}(t)$ in the oxygen gas-liquid separation tank 3, and the current I(t) supplied to the electrolytic bath 2. The time constant $T_{Ov}$ of the first-order lag function $1/(T_{Ov}s+1)$ is determined by means of data fitting.

[Math 6]

$$f_i(t) = \tau\, \frac{T_O(t)}{P_{O1}(t)} \frac{1}{T_{Ov}s+1} I(t) \quad \cdots (8)$$

According to the above-described equation (8), the larger the current I(t) supplied to the electrolytic bath 2 is, the larger the amount of generated oxygen 11 becomes and the larger the inflow rate $f_i(t)$ of the oxygen 11 into the oxygen gas-liquid separation tank 3 becomes. In addition, the higher the temperature $T_O(t)$ of the water 10 in the oxygen generation portion is, the larger the amount of generated oxygen 11 becomes and the larger the inflow rate $f_i(t)$ of the oxygen 11 into the oxygen gas-liquid separation tank 3 becomes. Further, the lower the pressure $P_{O1}(t)$ in the oxygen gas-liquid separation tank 3 is, the larger the amount of generated oxygen 11 becomes and the larger the inflow rate $f_i(t)$ of the oxygen 11 into the oxygen gas-liquid separation tank 3 becomes.

The pressure fluctuation model is configured as expressed by the following equation (9), based on constant pressure p (having "-" thereabove), specific volume v (having "-" thereabove), the tank gas phase volume $V_O(L)$ of the oxygen gas-liquid separation tank 3, an integral 1/s, the inflow rate model, and the outflow rate model.

[Math 7]

$$p(t) = \frac{\overline{pv}}{V_O(L)} \frac{1}{s} (f_i(t) - f_O(t)) \cdots (9)$$

According to the above-described equation (9), the larger the inflow rate $f_i(t)$ into the the oxygen gas-liquid separation tank 3 is, the larger the pressure fluctuation p(t) in the oxygen gas-liquid separation tank 3 becomes. In addition, the smaller the outflow rate $f_O(t)$ from the the oxygen gas-liquid separation tank 3 is, the larger the pressure fluctuation p(t) in the oxygen gas-liquid separation tank 3 becomes. Further, the smaller the tank gas phase volume $V_O(L)$ is, the faster the pressure fluctuation p(t) (fluctuation in the tank internal pressure $P_{O1}(t)$) becomes. In addition, the larger the tank gas phase volume $V_O(L)$ is, the slower the pressure fluctuation p(t) becomes.

Succeedingly, as illustrated in FIG. 5, an equation of the tank internal pressure $P_{O1}(t)$ (hereinafter, also referred to as "y(t)") in the oxygen gas-liquid separation tank 3 in the case where the controllers (the transfer functions $C_O(s)$, $F_{OI}(s)$, and $F_{OP}(s)$) of the first feedback control, the first feedforward control, and the third feedforward control are applied to the model of the first control target 41 expressed by the above-described equations (7) to (9) is derived.

[Math 8]

$$y(t) = (I + G_{OP}G_{OV2}C_O)^{-1}\{G_{OP}(G_{OI} - G_{OV1}F_{OI})I(t) \\ - G_{OP}(G_{OV2} + G_{OV1}F_{OP})P_{O2}(t) - G_{OP}G_{OV2}C_O r(t)\} \cdots (10)$$

In this equation, $G_{OP}(S)$ is a transfer function obtained by Laplace-transforming p(t), and $G_{OI}(s)$ is a transfer function obtained by Laplace-transforming $f_i(t)$. $G_{OV1}(s)$ is a transfer function obtained by Laplace-transforming terms representing influence of $u_O(t)$ in the case where $f_O(t)$ is converted to an approximate expression made up of the terms representing influence of $u_O(t)$ and terms representing influence of $P_{O2}(t)$. $G_{OV1}(s)$ is a transfer function obtained by Laplace-transforming the terms representing influence of $P_{O2}(t)$.

According to the above-described equation (10), in order to reduce influence of I(t) on the tank internal pressure y(t) in the oxygen gas-liquid separation tank 3, it is only required to satisfy the following equation (11). Therefore, the transfer function $F_{OI}(s)$ of the controller of the first feedforward control unit 34 is set as expressed by the following equation (12).

[Math 9]

$$G_{OI} - G_{OV1}F_{OI} = 0 \cdots (11)$$

$$F_{OI} = G_{OV1}^{-1}G_{OI} \cdots (12)$$

In these equations, the transfer functions $G_{OP}(s)$, $G_{OI}(s)$, $G_{OV1}(s)$, and $G_{OV2}(s)$ are expressed by the following equations (13), (14), (15), and (16), respectively.

[Math 10]

$$G_{OP}(s) = \frac{\bar{p}\,\bar{v}}{V_O(L)} \frac{1}{s} \quad \cdots (13)$$

$$G_{OI}(s) = \tau_O \frac{T_O(t)}{P_{OI}(t)} \frac{1}{T_{OV}s + 1} \quad \cdots (14)$$

$$G_{OVI}(s) = \frac{\alpha_O \bar{P}_{OI}}{\bar{P}_{OI}^2 - \bar{P}_{O2}^2} \quad \cdots (15)$$

$$G_{OV2}(s) = -\frac{\alpha_O \bar{P}_{O2}}{\bar{P}_{OI}^2 - \bar{P}_{O2}^2} \quad \cdots (16)$$

According to the above-described equations (13) to (16), the above-described equation (12) expressing the transfer function $F_{OI}(s)$ of the controller of the first feedforward control unit 34 is set as expressed by the following equation (17) .

[Math 11]

$$F_{OI} = G_{OVI}^{-1} G_{OI} = \frac{\bar{P}_{OI}^2 - \bar{P}_{O2}^2}{\alpha_O \bar{P}_{OI}} \tau_O \frac{T_O(t)}{P_O(t)} \frac{1}{T_{OV}s + 1} \quad \cdots (17)$$

According to the above-described equation (10), in order to reduce influence of $P_{O2}(t)$ on the tank internal pressure y(t) in the oxygen gas-liquid separation tank 3, it is only required to satisfy the following equation (18). Therefore, the transfer function $F_{OP}(s)$ of the controller of the third feedforward control unit 35 is set as expressed by the following equation (19).

[Math 12]

$$G_{OV2} + G_{OVI} F_{OP} = 0 \quad \cdots (18)$$

$$F_{OP} = -G_{OVI}^{-1} G_{OV2} \quad \cdots (19)$$

According to the above-described equations (13) to (16), the above-described equation (12) expressing the transfer function $F_{OP}(s)$ of the controller of the third feedforward control unit 35 is set as expressed by the following equation (20).

[Math 13]

$$F_{OP} = -G_{OVI}^{-1} G_{OV2} = \frac{\bar{P}_{OI}^2 - \bar{P}_{O2}^2}{\alpha \bar{P}_{OI}} \frac{\alpha \bar{P}_{O2}}{\bar{P}_{OI}^2 - \bar{P}_{O2}^2} = \frac{\bar{P}_{O2}}{\bar{P}_{OI}} \quad \cdots (20)$$

Further, when the transfer function $F_{OI}(s)$ expressed by the above-described equation (12) and the transfer function $F_{OP}(s)$ expressed by the above-described equation (19) are employed, the above-described equation (10) expressing the tank internal pressure y(t) in the oxygen gas-liquid separation tank 3 is set as expressed by the following equation (21).
[Math 14]

$$y(t) = -(I + G_{OP}G_{OV2}C_O)^{-1}G_{OP}G_{OV2}C_O r(t) \quad \cdots (21)$$

Since, in the above-described equation (21), $G_{OP}(s)$ includes $1/V_O(L)$, it is only required to multiply the entire transfer function $C_O(s)$ of the controller of the first feedback control unit 33 by $V_O(L)$ in order to reduce influence of fluctuation in $1/V_O(L)$ on closed-loop transfer characteristics. Therefore, the transfer function $C_O(s)$ of the controller of the first feedback control unit 33 is set as expressed by the following equation (22).
[Math 15]

$$C_O(s) = V_O(L) \left\{ K_{OP} + \frac{K_{OI}}{s} + K_{OD}s \right\} \quad \cdots (22)$$

When $G_{Op}(s)$ expressed by the above-described equation (13) and $C_O(s)$ expressed by the above-described equation (22) are employed, the above-described equation (21) expressing the tank internal pressure y(t) in the oxygen gas-liquid separation tank 3 is deformed as in the following equation (23).
[Math 16]

$$
\begin{aligned}
y(t) = &-(I + \frac{\bar{p}\bar{v}}{V_O(L)}\frac{1}{s}G_{OV2}V_O(L)\{K_{OP} + \frac{K_{OI}}{s} + K_{OD}s\})^{-1} \\
&\cdot \frac{\bar{p}\bar{v}}{V_O(L)}\frac{1}{s}G_{OV2}V_O(L)\{K_{OP} + \frac{K_{OI}}{s} + K_{OD}s\}r(t) \\
= &-(I + \frac{\bar{p}\bar{v}}{s}G_{OV2}\{K_{OP} + \frac{K_{OI}}{s} + K_{OD}s\})^{-1} \\
&\cdot \frac{\bar{p}\bar{v}}{s}G_{OV2}\{K_{OP} + \frac{K_{OI}}{s} + K_{OD}s\}r(t) \quad \cdots (23)
\end{aligned}
$$

In accordance with the above-described procedure, the transfer functions $C_O(s)$, $F_{OI}(s)$, and $F_{OP}(s)$ of the controllers of the first feedback control, the first feedforward control, and the third feedforward control in the first opening degree adjustment unit 31 are derived. The controllers of the second feedback control, the second feedforward control, and the fourth feedforward control in the second opening degree adjustment unit 32 can also be derived in a similar manner. In so doing, the equations become ones with subscripts "O" of variables (except $f_O(t)$) in the above-described equations (7) to (23) replaced with "H".

As described in the foregoing, in the water electrolysis apparatus 1 according to the embodiment of the present invention, the control of the opening degree $u_O(t)$ of the oxygen pressure control valve 21 includes the first feedback control for controlling the opening degree $u_O(t)$ of the oxygen pressure control valve 21, based on the tank internal pressure $P_{O1}(t)$, which is detected by the first tank internal pressure detector 22, in such a way that a difference between the tank internal pressure $P_{O1}(t)$ and the predetermined target pressure $P_{O*}(t)$ decreases and the first feedforward control for controlling the opening degree $u_O(t)$ of the oxygen pressure control valve 21, based on the current I(t), which is detected by the current detector 15. In addition, the control of the opening degree $u_H(t)$ of the hydrogen pressure control valve 26 includes the second feedback control for controlling the opening degree $u_H(t)$ of the hydrogen pressure control valve 26, based on the tank internal pressure $P_{H1}(t)$, which is detected by the second tank internal pressure detector 27, in such a way that a difference between the tank internal pressure $P_{H1}(t)$ and the predetermined target pressure $P_{H*}(t)$ decreases and the second feedforward control for controlling the opening degree $u_H(t)$ of the hydrogen pressure control valve 26, based on the current I(t), which is detected by the current detector 15.

Therefore, when, for example, the current I(t) supplied to the electrolytic bath 2 changes, the first feedforward control and the second feedforward control enable a difference between the tank internal pressure $P_{O1}(t)$ in the oxygen gas-liquid separation tank 3 and the target pressure $P_{O*}(t)$ and a difference between the tank internal pressure $P_{H1}(t)$ in the hydrogen gas-liquid separation tank 4 and the target pressure $P_{H*}(t)$ to be rapidly reduced. As such, it is possible to provide the water electrolysis apparatus 1 in which differential pressure between pressure of the oxygen 11 on the one surface 8a side of the electrolytic membrane 8 and pressure of the hydrogen 13 on the other surface 8b side of the electrolytic membrane 8 is more appropriately reduced. As a result, it is possible to appropriately prevent breakage of the electrolytic membrane 8.

In the water electrolysis apparatus 1 according to the embodiment of the present invention, the first feedforward control controls the opening degree $u_O(t)$ of the oxygen pressure control valve 21 in such a way that the larger the current $I(t)$, which is detected by the current detector 15, is, the larger the opening degree $u_O(t)$ of the oxygen pressure control valve 21 becomes. In addition, the second feedforward control controls the opening degree $u_H(t)$ of the hydrogen pressure control valve 26 in such a way that the larger the current $I(t)$, which is detected by the current detector 15, is, the larger the opening degree $u_H(t)$ of the hydrogen pressure control valve 26 becomes. Therefore, although the larger the current $I(t)$ is, the larger the amount of generated oxygen 11 becomes and the larger the inflow rate $f_i(t)$ of the oxygen 11 into the oxygen gas-liquid separation tank 3 becomes, it is possible to suppress increase in the tank internal pressure $P_{O1}(t)$ because the opening degree $u_O(t)$ of the oxygen pressure control valve 21 increases. Although the larger the current $I(t)$ is, the larger the amount of generated hydrogen 13 becomes and the larger the inflow rate $f_i(t)$ of the hydrogen 13 into the hydrogen gas-liquid separation tank 4 becomes, it is possible to suppress increase in the tank internal pressure $P_{H1}(t)$ because the opening degree $u_H(t)$ of the hydrogen pressure control valve 26 increases.

In the water electrolysis apparatus 1 according to the embodiment of the present invention, the higher the temperature $T_O(t)$ of the water 10 in the oxygen generation portion, which is detected by the temperature detector 16, is, the larger the first feedforward control sets the gain of the controller performing the first feedforward control. In addition, the higher the temperature $T_H(t)$ of the water 10 in the hydrogen generation portion, which is detected by the temperature detector 16, is, the larger the second feedforward control sets the gain of the controller performing the second feedforward control. Therefore, although the higher the temperature $T_O(t)$ of the water 10 in the oxygen generation portion is, the larger the amount of generated oxygen 11 becomes and the larger the inflow rate $f_i(t)$ of the oxygen 11 into the oxygen gas-liquid separation tank 3 becomes, it is possible to suppress increase in the tank internal pressure $P_{O1}(t)$ because the opening degree $u_O(t)$ of the oxygen pressure control valve 21 increases. Although the higher the temperature $T_H(t)$ of the water 10 in the hydrogen generation portion is, the larger the amount of generated hydrogen 13 becomes and the larger the inflow rate $f_i(t)$ of the hydrogen 13 into the hydrogen gas-liquid separation tank 4 becomes, it is possible to suppress increase in the tank internal pressure $P_{H1}(t)$ because the opening degree $u_H(t)$ of the hydrogen pressure control valve 26 increases.

In the water electrolysis apparatus 1 according to the embodiment of the present invention, the higher the tank internal pressure $P_{O1}(t)$, which is detected by the first tank internal pressure detector 22, is, the smaller the first feedforward control sets the gain of the controller performing the second feedforward control. In addition, the higher the tank internal pressure $P_{H1}(t)$, which is detected by the second tank internal pressure detector 27, is, the smaller the second feedforward control sets the gain of the controller performing the second feedforward control. Therefore, although the higher the tank internal pressure $P_{O1}(t)$ is, the larger the amount of generated oxygen 11 becomes and the larger the inflow rate $f_i(t)$ of the oxygen 11 into the oxygen gas-liquid separation tank 3 becomes, it is possible to suppress increase in the tank internal pressure $P_{O1}(t)$ because the opening degree $u_O(t)$ of the oxygen pressure control valve 21 increases. Although the higher the tank internal pressure $P_{H1}(t)$ is, the larger the amount of generated hydrogen 13 becomes and the larger the inflow rate $f_i(t)$ of the hydrogen 13 into the hydrogen gas-liquid separation tank 4 becomes, it is possible to suppress increase in the tank internal pressure $P_{H1}(t)$ because the opening degree $u_H(t)$ of the hydrogen pressure control valve 26 increases.

Further, in the water electrolysis apparatus 1 according to the embodiment of the present invention, the control of the opening degree $u_O(t)$ of the oxygen pressure control valve 21 includes the third feedforward control for controlling the opening degree $u_O(t)$ of the oxygen pressure control valve 21, based on the outlet pressure $P_{O2}(t)$, which is detected by the first outlet pressure detector 23. In addition, the control of the opening degree $u_H(t)$ of the hydrogen pressure control valve 26 includes the fourth feedforward control for controlling the opening degree $u_H(t)$ of the hydrogen pressure control valve 26, based on the outlet pressure $P_{H2}(t)$, which is detected by the second outlet pressure detector 28. Therefore, when, for example, the outlet pressure $P_{O2}(t)$ of the oxygen pressure control valve 21 and the outlet pressure $P_{H2}(t)$ of the hydrogen pressure control valve 26 change, the third feedforward control and the fourth feedforward control enable a difference between the tank internal pressure $P_{O1}(t)$ in the oxygen gas-liquid separation tank 3 and the target pressure $P_{O*}(t)$ and a difference between the tank internal pressure $P_{H1}(t)$ in the hydrogen gas-liquid separation tank 4 and the target pressure $P_{H*}(t)$ to be rapidly reduced. As such, it is possible to more appropriately reduce differential pressure between pressure of the oxygen 11 on the one surface 8a side of the electrolytic membrane 8 and pressure of the hydrogen 13 on the other surface 8b side of the electrolytic membrane 8.

In the water electrolysis apparatus 1 according to the embodiment of the present invention, the third feedforward control controls the opening degree $u_O(t)$ of the oxygen pressure control valve 21 in such a way that the higher the outlet pressure $P_{O2}(t)$, which is detected by the first outlet pressure detector 23, is, the larger the opening degree $u_O(t)$ of the oxygen pressure control valve 21 becomes. In addition, the fourth feedforward control controls the opening degree $u_H(t)$ of the hydrogen pressure control valve 26 in such a way that the higher the outlet pressure $P_{H2}(t)$, which is detected by the second outlet pressure detector 28, is, the larger the opening degree $u_H(t)$ of the hydrogen pressure control valve 26 becomes. Therefore, although the higher the outlet pressure $P_{O2}(t)$ is, the smaller the outflow rate $f_o(t)$ of the oxygen 11 from the oxygen gas-liquid separation tank 3 becomes, it is possible to suppress increase in the tank internal pressure $P_{O1}(t)$ because the opening degree $u_O(t)$ of the oxygen pressure control valve 21 increases. Although the higher the outlet pressure $P_{H2}(t)$ is, the smaller the outflow rate $f_o(t)$ of the hydrogen 13 from the hydrogen gas-liquid separation tank 4 becomes, it is possible to suppress increase in the tank internal pressure $P_{H1}(t)$ because the opening degree $u_H(t)$ of the hydrogen pressure control valve 26 increases.

Further, in the water electrolysis apparatus 1 according to the embodiment of the present invention, the higher the water level $L_O(t)$, which is detected by the first water level detector 19, is, the smaller the PID gains $V_O(L) \cdot K_{Op}$, $V_O(L) \cdot K_{OI}$, and $V_O(L) \cdot K_{OD}$ are set in the first feedback control. In addition, the higher the water level $L_H(t)$, which is detected by the second water level detector 24, is, the smaller the PID gains $V_H(L) \cdot K_{up}$, $V_H(L) \cdot K_{HI}$, and $V_H(L) \cdot K_{HD}$ are set in the second feedback control. Therefore, since the higher the water level $L_O(t)$ is and the smaller the tank gas phase volume $V_O(L)$ in the oxygen gas-liquid separation tank 3 is, the faster the fluctuation in the tank internal pressure $P_{O1}(t)$ in the oxygen gas-liquid separation tank 3 becomes, the sensitivity of the oxygen pressure control valve 21 increases. Thus, decreasing the PID gains $V_O(L) \cdot K_{Op}$, $V_O(L) \cdot K_{OI}$, and $V_O(L) \cdot K_{OD}$ and thereby lowering the sensitivity enable a control specification that is uniform without depending on the water level to be achieved. In addition, since the higher the water level $L_H(t)$ is, and the smaller the tank gas phase volume $V_H(L)$ in the hydrogen gas-liquid separation tank 4 is, the faster the fluctuation in the tank internal pressure $P_{H1}(t)$ in the hydrogen gas-liquid separation tank 4 becomes, the sensitivity of the hydrogen pressure control valve 26 increases. Thus, decreasing the PID gains $V_H(L) \cdot K_{up}$, $V_H(L) \cdot K_{HI}$, and $V_H(L) \cdot K_{HD}$ and thereby lowering the sensitivity enable a control specification that is uniform without depending on the water level to be achieved.

(Variations)

(1) In the water electrolysis apparatus 1 according to the embodiment of the present invention, a configuration in which, as illustrated in FIG. 2, the parameters $T_O(t)$ and $P_{O1}(t)$ of the transfer function $F_{OI}(s)$ of the controller of the first feedforward control unit 34 are acquired from the temperature detector 16 and the first tank internal pressure detector 22 was described. In addition, a configuration in which, as illustrated in FIG. 3, the parameters $T_H(t)$ and $P_{H1}(t)$ of the transfer function $F_{HI}(s)$ of the controller of the second feedforward control unit 38 are acquired from the temperature detector 16 and the second tank internal pressure detector 27 was described. However, the present invention is not limited to the configurations as described above, and another configuration can also be employed, as long as they are covered by the present invention as defined in the appended claims. For example, as illustrated in FIGS. 6A and 6B, a configuration of, instead of acquiring the parameters $T_O(t)$, $T_H(t)$, $P_{O1}(t)$, and $P_{H1}(t)$ of the transfer functions $F_{OI}(s)$ and $F_{HI}(s)$ from the outside, using fixed values as the parameters may be employed.

(2) In addition, for example, a configuration in which, as illustrated in FIGS. 7A and 7B, the third feedforward control unit 35 and the fourth feedforward control unit 39 are omitted may be employed. In addition to the omission, for example, a configuration of, instead of acquiring the parameters $T_O(t)$, $T_H(t)$, $P_{O1}(t)$, and $P_{H1}(t)$ of the transfer functions $F_{OI}(s)$ and $F_{HI}(s)$ from the outside, using fixed values as the parameters, as illustrated in FIGS. 8A and 8B may be employed.

In addition to the omission of the third feedforward control unit 35 and the fourth feedforward control unit 39, for example, a configuration of, instead of acquiring the parameter $V_O(L)$ of the transfer function $C_O(s)$ of the controller of the first feedback control unit 33 and the parameter $V_H(L)$ of the transfer function $C_H(s)$ of the controller of the second feedback control unit 37 from the outside, using fixed values as the parameters, as illustrated in FIGS. 9A and 9B may be employed. Further, in addition to the configuration of using fixed values as the parameters $V_O(L)$ and $V_H(L)$, for example, a configuration of, instead of acquiring the parameters $T_O(t)$, $T_H(t)$, $P_{O1}(t)$, and $P_{H1}(t)$ of the transfer functions $F_{OI}(s)$ and $F_{HI}(s)$ from the outside, also using fixed values as the parameters, as illustrated in FIGS. 10A and 10B may be employed.

(3) In the water electrolysis apparatus 1 according to the embodiment of the present invention, a configuration in which, as illustrated in FIG. 2, the parameter $V_O(L)$ of the transfer function $C_O(s)$ of the controller of the first feedback control unit 33 is acquired from the first water level detector 19 and, further, as illustrated in FIG. 3, the parameter $V_H(L)$ of the transfer function $C_H(s)$ of the controller of the second feedback control unit 37 is acquired from the second water level detector 24 was described.

However, the present invention is not limited to the configuration as described above, and another configuration can also be employed. For example, as illustrated in FIGS. 11A and 11B, instead of acquiring the parameters $V_O(L)$ and $V_H(L)$ of the transfer functions $C_O(s)$ and $C_H(s)$ from the outside, predetermined fixed values may be used as the parameters. In addition to the fixed values, for example, a configuration of, instead of acquiring the parameters $T_O(t)$, $T_H(t)$, $P_{OI}(t)$, and $P_{H1}(t)$ of the transfer functions $F_{OI}(s)$ and $F_{HI}(s)$ from the outside, also using fixed values as the parameters, as illustrated in FIGS. 12A and 12B may be employed.

Further, regarding secondary pressure fluctuation, from a relationship expressed by the above-described equation (7), characteristic change in the outflow rate with respect to secondary pressure change can be directly used for command value correction.

Reference Signs List

| | |
|---|---|
| 1 | Water electrolysis apparatus |
| 2 | Electrolytic bath |
| 3 | Oxygen gas-liquid separation tank |
| 4 | Hydrogen gas-liquid separation tank |
| 5 | Computer |
| 6 | Anode chamber |
| 7 | Cathode chamber |
| 8 | Electrolytic membrane |
| 8a | One surface |
| 8b | The other surface |
| 9 | Power |
| 10 | Water |
| 11 | Oxygen |
| 12 | Conduit |
| 13 | Hydrogen |
| 14 | Conduit |
| 15 | Current detector |
| 16 | Temperature detectors |
| 17 | Conduit for water |
| 18 | Water supply pump |
| 19 | First water level detector |
| 20 | Conduit for oxygen |
| 21 | Oxygen pressure control valve |
| 22 | First tank internal pressure detector |
| 23 | First outlet pressure detector |
| 24 | Second water level detector |
| 25 | Conduit for hydrogen |
| 26 | Hydrogen pressure control valve |
| 27 | Second tank internal pressure detector |
| 28 | Second outlet pressure detector |
| 29 | Storage device |
| 30 | Processor |
| 31 | First opening degree adjustment unit |
| 32 | Second opening degree adjustment unit |
| 33 | First feedback control unit |
| 34 | First feedforward control unit |
| 35 | Third feedforward control unit |
| 36 | First summing unit |
| 37 | Second feedback control unit |
| 38 | Second feedforward control unit |
| 39 | Fourth feedforward control unit |
| 40 | Second summing unit |
| 41 | First control target |

**Claims**

1. A water electrolysis apparatus (1) comprising:

an electrolytic bath (2) configured to electrolyze water, using an electrolytic membrane (8) and generate oxygen and hydrogen on one surface side and the other surface side of the electrolytic membrane (8), respectively;
an oxygen gas-liquid separation tank (3) configured to separate oxygen generated on the one surface side from water;

a conduit (20) for oxygen disposed to the oxygen gas-liquid separation tank and including an oxygen pressure control valve (21);

a first opening degree adjustment unit (31) configured to control an opening degree of the oxygen pressure control valve;

a hydrogen gas-liquid separation tank (4) configured to separate hydrogen generated on the other surface side from water;

a conduit (25) for hydrogen disposed to the hydrogen gas-liquid separation tank and including a hydrogen pressure control valve (26);

a second opening degree adjustment unit (32) configured to control an opening degree of the hydrogen pressure control valve;

a first tank internal pressure detector (22) configured to detect tank internal pressure in the oxygen gas-liquid separation tank;

a second tank internal pressure detector (27) configured to detect tank internal pressure in the hydrogen gas-liquid separation tank;

**characterised in that** the water electrolysis apparatus comprises:

a current detector (15) configured to detect current supplied to the electrolytic bath for the electrolysis, wherein

the apparatus further comprises

a) a first feedback control (33) configured to control the opening degree of the oxygen pressure control valve, based on tank internal pressure detected by the first tank internal pressure detector in such a way that a difference between the tank internal pressure and a predetermined target pressure decreases, and b) a first feedforward control (34) configured to control the opening degree of the oxygen pressure control valve, based on current detected by the current detector, and

c) a second feedback control (37) configured to control the opening degree of the hydrogen pressure control valve, based on tank internal pressure detected by the second tank internal pressure detector in such a way that a difference between the tank internal pressure and a predetermined target pressure decreases, and

d) a second feedforward control (38) configured to control the opening degree of the hydrogen pressure control valve, based on current detected by the current detector.

2. The water electrolysis apparatus (1) according to claim 1, wherein

the first feedforward control (34) is further configured to control an opening degree of the oxygen pressure control valve in such a way that the larger the current detected by the current detector is, the larger the opening degree of the oxygen pressure control valve becomes, and

the second feedforward control (38) is further configured to control an opening degree of the hydrogen pressure control valve in such a way that the larger the current detected by the current detector is, the larger the opening degree of the hydrogen pressure control valve becomes.

3. The water electrolysis apparatus (1) according to claim 1 or 2 comprising

temperature detectors (16) configured to detect temperature of water in an oxygen generation portion of the electrolytic bath and temperature of water in a hydrogen generation portion of the electrolytic bath, wherein

the first feedforward control (34) is further configured in such a way that the higher the temperature of the water in the oxygen generation portion detected by one of the temperature detectors is, the larger the gain of a controller performing the first feedforward control is set, and

the second feedforward control (38) is further configured in such a way that the higher the temperature of the water in the hydrogen generation portion detected by another of the temperature detectors is, the larger the gain of a controller performing the second feedforward control is set.

4. The water electrolysis apparatus (1) according to any one of claims 1 to 3, wherein

the first feedforward control (34) is further configured in such a way that the higher the tank internal pressure detected by the first tank internal pressure detector is, the smaller the gain of a controller performing the first feedforward control is set, and

the second feedforward control (38) is further configured in such a way that the higher the tank internal pressure detected by the second tank internal pressure detector is, the smaller the gain of a controller performing the second feedforward control is set.

5. The water electrolysis apparatus (1) according to any one of claims 1 to 4 comprising:

a first outlet pressure detector (23) configured to detect outlet pressure of the oxygen pressure control valve; and
a second outlet pressure detector (28) configured to detect outlet pressure of the hydrogen pressure control valve, wherein the apparatus further comprises
a third feedforward control (35) configured to control the opening degree of the oxygen pressure control valve, based on outlet pressure detected by the first outlet pressure detector, and
a fourth feedforward control (39) configured to control the opening degree of the hydrogen pressure control valve, based on outlet pressure detected by the second outlet pressure detector.

6. The water electrolysis apparatus (1) according to claim 5, wherein

the third feedforward control (35) is further configured to control an opening degree of the oxygen pressure control valve in such a way that the larger the outlet pressure detected by the first outlet pressure detector is, the larger the opening degree of the oxygen pressure control valve becomes, and
the fourth feedforward control (39) is further configured to control an opening degree of the hydrogen pressure control valve in such a way that the larger the outlet pressure detected by the second outlet pressure detector is, the larger the opening degree of the hydrogen pressure control valve becomes.

7. The water electrolysis apparatus (1) according to any one of claims 1 to 6 comprising:

a first water level detector (19) configured to detect a water level in the oxygen gas-liquid separation tank; and
a second water level detector (24) configured to detect a water level in the hydrogen gas-liquid separation tank, wherein
the first feedback control (33) is further configured to perform PID control and, the higher the water level detected by the first water level detector is, the smaller the PID gain of the PID control is set, and
the second feedback control (37) is further configured to perform PID control and the higher the water level detected by the second water level detector is, the smaller the PID gain of the PID control is set.

**Patentansprüche**

1. Wasserelektrolysevorrichtung (1), umfassend:

ein Elektrolysebad (2), das so konfiguriert ist, dass es mit Hilfe einer Elektrolytmembran (8) Wasser elektrolysieren und auf einer Oberflächenseite der Elektrolytmembran (8) Sauerstoff und auf der anderen Oberflächenseite Wasserstoff erzeugen kann;
einen Sauerstoffgas-Flüssigkeits-Trenntank (3), der so konfiguriert ist, dass er auf der einen Oberflächenseite erzeugten Sauerstoff von Wasser trennen kann;
eine Leitung (20) für Sauerstoff, die sich am Sauerstoffgas-Flüssigkeits-Trenntank befindet und ein Sauerstoffdruck-Regelventil (21) umfasst;
eine erste Öffnungsgradstelleinheit (31), die so konfiguriert ist, dass sie den Öffnungsgrad des Sauerstoffdruck-Regelventils steuern kann;
einen Wasserstoffgas-Flüssigkeits-Trenntank (4), der so konfiguriert ist, dass er auf der anderen Oberflächenseite erzeugten Wasserstoff von Wasser trennen kann;
eine Leitung (25) für Wasserstoff, die sich am Wasserstoffgas-Flüssigkeits-Trenntank befindet und ein Wasserstoffdruck-Regelventil (26) umfasst;
eine zweite Öffnungsgradstelleinheit (32), die so konfiguriert ist, dass sie den Öffnungsgrad des Wasserstoffdruck-Regelventils steuern kann;
einen ersten Tankinnendruckdetektor (22), der so konfiguriert ist, dass er den Tankinnendruck in dem Sauerstoffgas-Flüssigkeits-Trenntank bestimmen kann;
einen zweiten Tankinnendruckdetektor (27), der so konfiguriert ist, dass er den Tankinnendruck in dem Wasserstoffgas-Flüssigkeits-Trenntank bestimmen kann;
**dadurch gekennzeichnet, dass** die Wasserelektrolysevorrichtung Folgendes umfasst:

einen Stromdetektor (15), der so konfiguriert ist, dass er Strom, der zur Elektrolyse zum Elektrolysebad geleitet wurde, nachweisen kann, wobei
die Vorrichtung weiterhin umfasst:

a) einen ersten Regelkreis (33), der so konfiguriert ist, dass er anhand des von dem ersten Tankinnendruckdetektor bestimmten Tankinnendrucks den Öffnungsgrad des Sauerstoffdruck-Regelventils so steuern kann, dass die Differenz zwischen dem Tankinnendruck und einem vorbestimmten Solldruck abnimmt, und

b) eine erste Vorsteuerung (34), die so konfiguriert ist, dass sie anhand des von dem Stromdetektor nachgewiesenen Stroms den Öffnungsgrad des Sauerstoffdruck-Regelventils steuern kann, und

c) einen zweiten Regelkreis (37), der so konfiguriert ist, dass er anhand des von dem zweiten Tankinnendruckdetektor bestimmten Tankinnendrucks den Öffnungsgrad des Wasserstoffdruck-Regelventils so steuern kann, dass die Differenz zwischen dem Tankinnendruck und einem vorbestimmten Solldruck abnimmt, und

d) eine zweite Vorsteuerung (38), die so konfiguriert ist, dass sie anhand des von dem Stromdetektor nachgewiesenen Stroms den Öffnungsgrad des Wasserstoffdruck-Regelventils steuern kann.

2. Wasserelektrolysevorrichtung (1) gemäß Anspruch 1, wobei

die erste Vorsteuerung (34) weiterhin so konfiguriert ist, dass sie den Öffnungsgrad des Sauerstoffdruck-Regelventils so steuern kann, dass der Öffnungsgrad des Sauerstoffdruck-Regelventils um so größer wird, je größer der von dem Stromdetektor nachgewiesene Strom ist, und

die zweite Vorsteuerung (38) weiterhin so konfiguriert ist, dass sie den Öffnungsgrad des Wasserstoffdruck-Regelventils so steuern kann, dass der Öffnungsgrad des Wasserstoffdruck-Regelventils um so größer wird, je größer der von dem Stromdetektor nachgewiesene Strom ist.

3. Wasserelektrolysevorrichtung (1) gemäß Anspruch 1 oder 2, umfassend

Temperaturdetektoren (16), die so konfiguriert sind, dass sie die Temperatur des Wassers in einem Sauerstofferzeugungsteil des Elektrolysebads und die Temperatur des Wassers in einem Wasserstofferzeugungsteil des Elektrolysebads bestimmen können, wobei

die erste Vorsteuerung (34) weiterhin so konfiguriert ist, dass die Verstärkung einer Steuerung, die die erste Vorsteuerung durchführt, um so größer eingestellt ist, je höher die durch einen der Temperaturdetektoren bestimmte Temperatur des Wassers in dem Sauerstofferzeugungsteil ist, und

die zweite Vorsteuerung (38) weiterhin so konfiguriert ist, dass die Verstärkung einer Steuerung, die die zweite Vorsteuerung durchführt, um so größer eingestellt ist, je höher die durch einen anderen der Temperaturdetektoren bestimmte Temperatur des Wassers in dem Wasserstofferzeugungsteil ist.

4. Wasserelektrolysevorrichtung (1) gemäß einem der Ansprüche 1 bis 3, wobei

die erste Vorsteuerung (34) weiterhin so konfiguriert ist, dass die Verstärkung einer Steuerung, die die erste Vorsteuerung durchführt, um so kleiner eingestellt ist, je höher der von dem ersten Tankinnendruckdetektor bestimmte Tankinnendruck ist, und

die zweite Vorsteuerung (38) weiterhin so konfiguriert ist, dass die Verstärkung einer Steuerung, die die zweite Vorsteuerung durchführt, um so kleiner eingestellt ist, je höher der von dem zweiten Tankinnendruckdetektor bestimmte Tankinnendruck ist.

5. Wasserelektrolysevorrichtung (1) gemäß einem der Ansprüche 1 bis 4, umfassend:

einen ersten Auslassdruckdetektor (23), der so konfiguriert ist, dass er den Auslassdruck des Sauerstoffdruck-Regelventils bestimmen kann; und

einen zweiten Auslassdruckdetektor (28), der so konfiguriert ist, dass er den Auslassdruck des Wasserstoffdruck-Regelventils bestimmen kann, wobei die Vorrichtung weiterhin umfasst:

eine dritte Vorsteuerung (35), die so konfiguriert ist, dass sie anhand des von dem ersten Auslassdruckdetektor bestimmten Auslassdrucks den Öffnungsgrad des Sauerstoffdruck-Regelventils steuern kann, und

eine vierte Vorsteuerung (39), die so konfiguriert ist, dass sie anhand des von dem zweiten Auslassdruckdetektor bestimmten Auslassdrucks den Öffnungsgrad des Wasserstoffdruck-Regelventils steuern kann.

**6.** Wasserelektrolysevorrichtung (1) gemäß Anspruch 5, wobei

die dritte Vorsteuerung (35) weiterhin so konfiguriert ist, dass sie den Öffnungsgrad des Sauerstoffdruck-Regelventils so steuern kann, dass der Öffnungsgrad des Sauerstoffdruck-Regelventils um so größer wird, je größer der von dem ersten Auslassdruckdetektor bestimmte Auslassdruck ist, und
die vierte Vorsteuerung (39) weiterhin so konfiguriert ist, dass sie den Öffnungsgrad des Wasserstoffdruck-Regelventils so steuern kann, dass der Öffnungsgrad des Wasserstoffdruck-Regelventils um so größer wird, je größer der von dem zweiten Auslassdruckdetektor bestimmte Auslassdruck ist.

**7.** Wasserelektrolysevorrichtung (1) gemäß einem der Ansprüche 1 bis 6, umfassend:

einen ersten Wasserstandsdetektor (19), der so konfiguriert ist, dass er den Wasserstand in dem Sauerstoffgas-Flüssigkeits-Trenntank bestimmen kann; und
einen zweiten Wasserstandsdetektor (24), der so konfiguriert ist, dass er den Wasserstand in dem Wasserstoffgas-Flüssigkeits-Trenntank bestimmen kann, wobei
die erste Vorsteuerung (33) weiterhin so konfiguriert ist, dass sie eine PID-Steuerung durchführen kann, und die PID-Verstärkung der PID-Steuerung um so kleiner eingestellt wird, je höher der von dem ersten Wasserstandsdetektor gemessene Wasserstand ist, und
die zweite Vorsteuerung (37) weiterhin so konfiguriert ist, dass sie eine PID-Steuerung durchführen kann, und die PID-Verstärkung der PID-Steuerung um so kleiner eingestellt wird, je höher der von dem zweiten Wasserstandsdetektor gemessene Wasserstand ist.

**Revendications**

**1.** Appareil d'électrolyse de l'eau (1) comprenant :

un bain électrolytique (2) configuré pour électrolyser l'eau en utilisant une membrane électrolytique (8) et pour générer de l'oxygène et de l'hydrogène sur un premier côté de surface et l'autre côté de surface de la membrane électrolytique (8), respectivement ;
une cuve de séparation d'oxygène gazeux-liquide (3) configurée pour séparer d'avec l'eau l'oxygène généré sur le premier côté de surface ;
une conduite (20) pour l'oxygène disposée au niveau de la cuve de séparation d'oxygène gazeux-liquide et incluant une vanne de commande de pression d'oxygène (21) ;
une première unité d'ajustement de degré d'ouverture (31) configurée pour commander le degré d'ouverture de la vanne de commande de pression d'oxygène ;
une cuve de séparation d'hydrogène gazeux-liquide (4) configurée pour séparer d'avec l'eau l'hydrogène généré sur l'autre côté de surface ;
une conduite (25) pour l'hydrogène disposée au niveau de la cuve de séparation d'hydrogène gazeux-liquide et incluant une vanne de commande de pression d'hydrogène (26) ;
une deuxième unité d'ajustement de degré d'ouverture (32) configurée pour commander le degré d'ouverture de la vanne de commande de pression d'hydrogène ;
un premier détecteur de pression interne de cuve (22) configuré pour détecter la pression interne de cuve dans la cuve de séparation d'oxygène gazeux-liquide ;
un deuxième détecteur de pression interne de cuve (27) configuré pour détecter la pression interne de cuve dans la cuve de séparation d'hydrogène gazeux-liquide ;
**caractérisé en ce que** l'appareil d'électrolyse de l'eau comprend :

un détecteur de courant (15) configuré pour détecter le courant fourni au bain électrolytique pour l'électrolyse, dans lequel
l'appareil comprend en outre

a) une première commande rétroactive (33) configurée pour commander le degré d'ouverture de la vanne de commande de pression d'oxygène, sur la base de la pression interne de cuve détectée par le premier détecteur de pression interne de cuve de façon que la différence entre la pression interne de cuve et une pression cible prédéterminée diminue, et
b) une première commande prédictive (34) configurée pour commander le degré d'ouverture de la vanne de commande de pression d'oxygène, sur la base du courant détecté par le détecteur de courant, et

c) une deuxième commande rétroactive (37) configurée pour commander le degré d'ouverture de la vanne de commande de pression d'hydrogène, sur la base de la pression interne de cuve détectée par le deuxième détecteur de pression interne de cuve de façon que la différence entre la pression interne de cuve et une pression cible prédéterminée diminue, et

d) une deuxième commande prédictive (38) configurée pour commander le degré d'ouverture de la vanne de commande de pression d'hydrogène, sur la base du courant détecté par le détecteur de courant.

**2.** Appareil d'électrolyse de l'eau (1) selon la revendication 1, dans lequel

la première commande prédictive (34) est en outre configurée pour commander le degré d'ouverture de la vanne de commande de pression d'oxygène de façon que le degré d'ouverture de la vanne de commande de pression d'oxygène devienne d'autant plus grand que le courant détecté par le détecteur de courant est élevé, et

la deuxième commande prédictive (38) est en outre configurée pour commander le degré d'ouverture de la vanne de commande de pression d'hydrogène de façon que le degré d'ouverture de la vanne de commande de pression d'hydrogène devienne d'autant plus grand que le courant détecté par le détecteur de courant est élevé.

**3.** Appareil d'électrolyse de l'eau (1) selon la revendication 1 ou 2, comprenant

des détecteurs de température (16) configurés pour détecter la température de l'eau dans une portion de génération d'oxygène du bain électrolytique et la température de l'eau dans une portion de génération d'hydrogène du bain électrolytique, dans lequel

la première commande prédictive (34) est en outre configurée de façon que le gain d'un contrôleur effectuant la première commande prédictive soit établi d'autant plus élevé que la température de l'eau dans la portion de génération d'oxygène détectée par l'un des détecteurs de température est élevée, et

la deuxième commande prédictive (38) est en outre configurée de façon que le gain d'un contrôleur effectuant la deuxième commande prédictive soit établi d'autant plus élevé que la température de l'eau dans la portion de génération d'hydrogène détectée par un autre des détecteurs de température est élevée.

**4.** Appareil d'électrolyse de l'eau (1) selon l'une quelconque des revendications 1 à 3, dans lequel

la première commande prédictive (34) est en outre configurée de façon que le gain d'un contrôleur effectuant la première commande prédictive soit établi d'autant plus faible que la pression interne de cuve détectée par le premier détecteur de pression interne de cuve est élevée, et

la deuxième commande prédictive (38) est en outre configurée de façon que le gain d'un contrôleur effectuant la deuxième commande prédictive soit établi d'autant plus faible que la pression interne de cuve détectée par le deuxième détecteur de pression interne de cuve est élevée.

**5.** Appareil d'électrolyse de l'eau (1) selon l'une quelconque des revendications 1 à 4, comprenant :

un premier détecteur de pression de sortie (23) configuré pour détecter la pression de sortie de la vanne de commande de pression d'oxygène ; et

un deuxième détecteur de pression de sortie (28) configuré pour détecter la pression de sortie de la vanne de commande de pression d'hydrogène,

lequel appareil comprend en outre

une troisième commande prédictive (35) configurée pour commander le degré d'ouverture de la vanne de commande de pression d'oxygène, sur la base de la pression de sortie détectée par le premier détecteur de pression de sortie, et

une quatrième commande prédictive (39) configurée pour commander le degré d'ouverture de la vanne de commande de pression d'hydrogène, sur la base de la pression de sortie détectée par le deuxième détecteur de pression de sortie.

**6.** Appareil d'électrolyse de l'eau (1) selon la revendication 5, dans laquelle

la troisième commande prédictive (35) est en outre configurée pour commander le degré d'ouverture de la vanne de commande de pression d'oxygène de façon que le degré d'ouverture de la vanne de commande de pression d'oxygène devienne d'autant plus grand que la pression de sortie détecté par le premier détecteur de pression de sortie est élevée, et

la quatrième commande prédictive (39) est en outre configurée pour commander le degré d'ouverture de la vanne de commande de pression d'hydrogène de façon que le degré d'ouverture de la vanne de commande de pression d'hydrogène devienne d'autant plus grand que la pression de sortie détectée par le deuxième détecteur de pression de sortie est élevée.

7. Appareil d'électrolyse de l'eau (1) selon l'une quelconque des revendications 1 à 6, comprenant :

un premier détecteur de niveau d'eau (19) configuré pour détecter le niveau d'eau dans la cuve de séparation d'oxygène gazeux-liquide ; et
un deuxième détecteur de niveau d'eau (24) configuré pour détecter le niveau d'eau dans la cuve de séparation d'hydrogène gazeux-liquide,
dans lequel
la première commande rétroactive (33) est en outre configurée pour effectuer une commande PID, et le gain PID de la commande PID est établi d'autant plus faible que le niveau d'eau détecté dans le premier détecteur de niveau d'eau est haut, et
la deuxième commande rétroactive (37) est en outre configurée pour effectuer une commande PID, et le gain PID de la commande PID est établi d'autant plus faible que le niveau d'eau détecté dans le deuxième détecteur de niveau d'eau est haut.

FIG. 1

# FIG. 2

31

$T_O(t)、P_{O1}(t)$

FIRST OPENING DEGREE
ADJUSTMENT UNIT

36

$I(t)$

34 — FIRST FEEDFORWARD
CONTROL UNIT $F_{OI}(s)$

$u_{OFF1}(t)$ → +

$P_{O2}(t)$

35 — THIRD FEEDFORWARD
CONTROL UNIT $F_{OP}(s)$

$u_{OFF3}(t)$ → +

$P_{O*}(t)$ → + ⊖ −

33 — FIRST FEEDBACK
CONTROL UNIT $C_O(s)$

$u_{OFB1}(t)$ → +

$u_O(t)$ →

$P_{O1}(t)$

$V_O(L)$

# FIG. 3

32

$T_H(t)、P_{H1}(t)$

SECOND OPENING DEGREE
ADJUSTMENT UNIT

40

$I(t)$

38 — SECOND FEEDFORWARD
CONTROL UNIT $F_{HI}(s)$

$u_{HFF2}(t)$ → +

$P_{H2}(t)$

39 — FOURTH FEEDFORWARD
CONTROL UNIT $F_{HP}(s)$

$u_{HFF4}(t)$ → +

$P_{H*}(t)$ → + ⊖ −

37 — SECOND FEEDBACK
CONTROL UNIT $C_H(s)$

$u_{HFB2}(t)$ → +

$u_H(t)$ →

$P_{H1}(t)$

$V_H(L)$

# FIG. 4

FIG. 5

$P_{O1}(t) = y(t)$

$G_{OP}(s)$

$I(t)$

$G_{OI}(s)$

$P_{O2}(t)$

$G_{OV2}(s)$

$G_{OV1}(s)$

41　FIRST CONTROL TARGET

$u_O(t)$

36

$F_{OI}(s)$

$F_{OP}(s)$

$C_O(s)$

34

35

33

31

$P_*(t)$

# FIG. 6A

31

FIRST OPENING DEGREE ADJUSTMENT UNIT

36

$I(t)$ → 34 FIRST FEEDFORWARD CONTROL UNIT $F_{OI}(s)$ → $u_{OFF1}(t)$ → +

$P_{O2}(t)$ → 35 THIRD FEEDFORWARD CONTROL UNIT $F_{OP}(s)$ → $u_{OFF3}(t)$ → +

$P_{O*}(t)$ + / $P_{O1}(t)$ − → 33 FIRST FEEDBACK CONTROL UNIT $C_O(s)$ → $u_{OFB1}(t)$ → + → $u_O(t)$

$V_O(L)$

# FIG. 6B

32

SECOND OPENING DEGREE ADJUSTMENT UNIT

40

$I(t)$ → 38 SECOND FEEDFORWARD CONTROL UNIT $F_{HI}(s)$ → $u_{HFF2}(t)$ → +

$P_{H2}(t)$ → 39 FOURTH FEEDFORWARD CONTROL UNIT $F_{HP}(s)$ → $u_{HFF4}(t)$ → +

$P_{H*}(t)$ + / $P_{H1}(t)$ − → 37 SECOND FEEDBACK CONTROL UNIT $C_H(s)$ → $u_{HFB2}(t)$ → + → $u_H(t)$

$V_H(L)$

27

# FIG. 7A

$T_O(t)$, $P_{O1}(t)$

31

FIRST OPENING DEGREE
ADJUSTMENT UNIT

36

34

$I(t)$ →

FIRST FEEDFORWARD
CONTROL UNIT $F_{OI}(s)$

$u_{OFF1}(t)$

+

33

$P_{O*}(t)$ →

FIRST FEEDBACK
CONTROL UNIT $C_O(s)$

$u_{OFB1}(t)$

+

$u_O(t)$ →

$P_{O1}(t)$ —

$V_O(L)$

# FIG. 7B

$T_H(t)$, $P_{H1}(t)$

32

SECOND OPENING DEGREE
ADJUSTMENT UNIT

40

38

$I(t)$ →

SECOND FEEDFORWARD
CONTROL UNIT $F_{HI}(s)$

$u_{HFF2}(t)$

+

37

$P_{H*}(t)$ →

SECOND FEEDBACK
CONTROL UNIT $C_H(s)$

$u_{HFB2}(t)$

+

$u_H(t)$ →

$P_{H1}(t)$ —

$V_H(L)$

# FIG. 8A

31

FIRST OPENING DEGREE ADJUSTMENT UNIT

36

$I(t)$

34 — FIRST FEEDFORWARD CONTROL UNIT $F_{OI}(s)$ — $u_{OFF1}(t)$ — +

$P_{O*}(t)$ — 33 — FIRST FEEDBACK CONTROL UNIT $C_O(s)$ — $u_{OFB1}(t)$ — + — $u_O(t)$

$P_{O1}(t)$ —

$V_O(L)$

# FIG. 8B

32

SECOND OPENING DEGREE ADJUSTMENT UNIT

40

$I(t)$

38 — SECOND FEEDFORWARD CONTROL UNIT $F_{HI}(s)$ — $u_{HFF2}(t)$ — +

$P_{H*}(t)$ — 37 — SECOND FEEDBACK CONTROL UNIT $C_H(s)$ — $u_{HFB2}(t)$ — + — $u_H(t)$

$P_{H1}(t)$ —

$V_H(L)$

EP 3 839 101 B1

# FIG. 9A

31

$T_O(t), P_{O1}(t)$

36

FIRST OPENING DEGREE
ADJUSTMENT UNIT

34

$I(t)$ → FIRST FEEDFORWARD
CONTROL UNIT $F_{OI}(s)$ → $u_{OFF1}(t)$ → +

33

$P_{O*}(t)$ → + ⊖ − FIRST FEEDBACK
CONTROL UNIT $C_O(s)$ → $u_{OFB1}(t)$ → + → $u_O(t)$

$P_{O1}(t)$

# FIG. 9B

32

$T_H(t), P_{H1}(t)$

40

SECOND OPENING DEGREE
ADJUSTMENT UNIT

38

$I(t)$ → SECOND FEEDFORWARD
CONTROL UNIT $F_{HI}(s)$ → $u_{HFF2}(t)$ → +

37

$P_{H*}(t)$ → + ⊖ − SECOND FEEDBACK
CONTROL UNIT $C_H(s)$ → $u_{HFB2}(t)$ → + → $u_H(t)$

$P_{H1}(t)$

30

# FIG. 10A

31

**FIRST OPENING DEGREE ADJUSTMENT UNIT**

36

$I(t)$ ⟶ 34 ⟶ FIRST FEEDFORWARD CONTROL UNIT $F_{OI}(s)$ ⟶ $u_{OFF1}(t)$ ⟶ $+$

$P_{O*}(t)$ ⟶ 33 ⟶ FIRST FEEDBACK CONTROL UNIT $C_O(s)$ ⟶ $u_{OFB1}(t)$ ⟶ $+$ ⟶ $u_O(t)$

$P_{O1}(t)$ ⟶ $-$

# FIG. 10B

32

**SECOND OPENING DEGREE ADJUSTMENT UNIT**

40

$I(t)$ ⟶ 38 ⟶ SECOND FEEDFORWARD CONTROL UNIT $F_{HI}(s)$ ⟶ $u_{HFF2}(t)$ ⟶ $+$

$P_{H*}(t)$ ⟶ 37 ⟶ SECOND FEEDBACK CONTROL UNIT $C_H(s)$ ⟶ $u_{HFB2}(t)$ ⟶ $+$ ⟶ $u_H(t)$

$P_{H1}(t)$ ⟶ $-$

# FIG. 11A

$T_O(t)$、$P_{O1}(t)$

31

FIRST OPENING DEGREE
ADJUSTMENT UNIT

36

34 — FIRST FEEDFORWARD
CONTROL UNIT $F_{OI}(s)$ | $u_{OFF1}(t)$ | +

$I(t)$ →

35 — THIRD FEEDFORWARD
CONTROL UNIT $F_{OP}(s)$ | $u_{OFF3}(t)$ | +

$P_{O2}(t)$ →

33 — FIRST FEEDBACK
CONTROL UNIT $C_O(s)$ | $u_{OFB1}(t)$ | +

$P_{O*}(t)$ → + ⊖ −

$u_O(t)$ →

$P_{O1}(t)$ —

# FIG. 11B

$T_H(t)$、$P_{H1}(t)$

32

SECOND OPENING DEGREE
ADJUSTMENT UNIT

40

38 — SECOND FEEDFORWARD
CONTROL UNIT $F_{HI}(s)$ | $u_{HFF2}(t)$ | +

$I(t)$ →

39 — FOURTH FEEDFORWARD
CONTROL UNIT $F_{HP}(s)$ | $u_{HFF4}(t)$ | +

$P_{H2}(t)$ →

37 — SECOND FEEDBACK
CONTROL UNIT $C_H(s)$ | $u_{HFB2}(t)$ | +

$P_{H*}(t)$ → + ⊖ −

$u_H(t)$ →

$P_{H1}(t)$ —

32

# FIG. 12A

31

FIRST OPENING DEGREE ADJUSTMENT UNIT

36

$I(t)$ → 34 → FIRST FEEDFORWARD CONTROL UNIT $F_{OI}(s)$ → $u_{OFF1}(t)$ → +

$P_{O2}(t)$ → 35 → THIRD FEEDFORWARD CONTROL UNIT $F_{OP}(s)$ → $u_{OFF3}(t)$ → +

$P_{O*}(t)$ → + − 33 → FIRST FEEDBACK CONTROL UNIT $C_O(s)$ → $u_{OFB1}(t)$ → + → $u_O(t)$

$P_{O1}(t)$

# FIG. 12B

32

SECOND OPENING DEGREE ADJUSTMENT UNIT

40

$I(t)$ → 38 → SECOND FEEDFORWARD CONTROL UNIT $F_{HI}(s)$ → $u_{HFF2}(t)$ → +

$P_{H2}(t)$ → 39 → FOURTH FEEDFORWARD CONTROL UNIT $F_{HP}(s)$ → $u_{HFF4}(t)$ → +

$P_{H*}(t)$ → + − 37 → SECOND FEEDBACK CONTROL UNIT $C_H(s)$ → $u_{HFB2}(t)$ → + → $u_H(t)$

$P_{H1}(t)$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4000415 B
- JP H08193287 A
- JP 2011006769 A
- JP 2003138391 A